# EUROPEAN PATENT SPECIFICATION

(11) **EP 4 343 037 B1**
(45) Date of publication and mention of the grant of the patent: **11.11.2026**
(21) Application number: 22804573.8
(22) Date of filing: 11.05.2022
(51) Int. Cl.: C25B 13/02, B01D 65/00, B01D 69/12, B01D 69/14, C25B 1/04, C25B 9/23, C25B 11/052, C25B 11/081, C25B 13/05, C25B 13/07, C25B 13/08, H01B 1/06, H01B 1/12, H01M 4/88, H01M 8/10, H01M 8/1004, H01M 8/1039, H01M 8/1046, H01M 8/1051, H01M 8/1053

(54) **ELECTROLYTE MEMBRANE LAMINATE, ELECTROLYTE MEMBRANE EQUIPPED WITH CATALYST LAYER, MEMBRANE ELECTRODE CONJUGATE, HYDROLYSIS-TYPE HYDROGEN GENERATION DEVICE, AND METHOD FOR PRODUCING ELECTROLYTE MEMBRANE EQUIPPED WITH CATALYST LAYER**
ELEKTROLYTMEMBRANLAMINAT, ELEKTROLYTMEMBRAN MIT KATALYSATORSCHICHT, MEMBRANELEKTRODENKONJUGAT, HYDROLYSEWASSERSTOFFERZEUGUNGSVORRICHTUNG UND VERFAHREN ZUR HERSTELLUNG EINER ELEKTROLYTMEMBRAN MIT KATALYSATORSCHICHT
STRATIFIÉ DE MEMBRANES ÉLECTROLYTIQUES, MEMBRANE ÉLECTROLYTIQUE ÉQUIPÉE D'UNE COUCHE CATALYTIQUE, CONJUGUÉ MEMBRANE-ÉLECTRODE, DISPOSITIF DE GÉNÉRATION D'HYDROGÈNE PAR HYDROLYSE, ET PROCÉDÉ DE PRODUCTION D'UNE MEMBRANE ÉLECTROLYTIQUE ÉQUIPÉE D'UNE COUCHE CATALYTIQUE

(30) Priority: 17.05.2021 JP 2021083045
(43) Date of publication of application: 27.03.2024
(73) Proprietor: Toray Industries, Inc., Tokyo 103-8666 (JP)
(72) Inventor: KUNITA, Tomoyuki, Otsu-shi, Shiga 520-8558 (JP); MINAMIBAYASHI, Kenta, Otsu-shi, Shiga 520-8558 (JP); SHIRAI, Shusuke, Otsu-shi, Shiga 520-8558 (JP); MATSUI, Kazuma, Otsu-shi, Shiga 520-8558 (JP); IZUHARA, Daisuke, Otsu-shi, Shiga 520-8558 (JP)
(74) Representative: Hoefer & Partner Patentanwälte mbB
(86) International application number: PCT/JP2022/019910
(87) International publication number: WO 2022/244660

(56) References cited:
- EP-A1- 3 648 218
- WO-A1-2018/115821
- WO-A1-2020/148545
- WO-A1-2020/196278
- WO-A1-2020/196278
- CA-A1- 2 522 017
- CN-A- 102 709 574
- CN-A- 112 803 029
- CN-A- 112 803 029
- JP-A- 2004 006 306
- JP-A- 2009 087 742
- JP-A- 2015 117 417
- JP-A- 2015 117 417
- JP-A- 2019 061 863
- JP-A- 2019 061 863
- JP-B2- 5 294 550
- US-A1- 2006 068 268
- US-A1- 2009 291 345
- US-A1- 2010 159 351

## Description

### TECHNICAL FIELD

The present invention relates to an electrolyte membrane laminate, a catalyst coated electrolyte membrane, a membrane electrode assembly, a water electrolysis hydrogen generator, and a method of producing a catalyst coated electrolyte membrane.

### BACKGROUND ART

In recent years, hydrogen energy has been attracting attention as means of energy storage and transportation in the next generation. Hydrogen used as a fuel for a fuel cell can be converted into electric power with a theoretically higher energy efficiency than power generation performed using a heat engine, generates no harmful emission, and thus, can become a highly efficient and clean source of energy.

An example of a mode of hydrogen production is electrolysis of water. Electrolyzing water using surplus electric power from a renewable energy can convert electric power into hydrogen energy without emitting carbon dioxide. Furthermore, depending on the mode of storage, hydrogen can be transported in a tank lorry or a tanker, can be supplied where and when necessary, and thus, electrolysis of water has a high possibility as a tool of storage of electric power.

A mode of hydrogen production based on electrolysis of water is alkaline water electrolysis or a polymer electrolyte membrane (PEM) type of water electrolysis. The PEM type of water electrolysis can be operated at a high current density, and has the advantage of being capable of flexibly dealing with fluctuations in output of renewable energy.

However, an electrolyte membrane to be used in a PEM type of water-electrolysis cell, if without a sufficient hydrogen-proof barrier property, causes a safety problem in that hydrogen generated permeates from a cathode to an anode, thus generating a gas mixture of hydrogen and oxygen at the anode.

In view of this, an example is disclosed (Patent Literature 1 and 2), in which a layer containing a platinum group metal (a platinum group metal-containing layer) is provided between an electrolyte membrane and an anode, and thus, hydrogen allowed to permeate and diffuse through the electrolyte membrane reacts with generated oxygen by catalysis to form water, thereby decreasing the concentration of hydrogen at the anode.

On the other hand, a commonly known polymer electrolyte constituting an electrolyte membrane is conventionally a fluorine-based polymer electrolyte, such as perfluorocarbonsulfonic acid. In the above-described Patent Literature 1 and 2, a fluorine-based polymer electrolyte is used. However, there are problems, for example, in that such a fluorine-based polymer electrolyte is expensive, has a relatively small hydrogen-proof barrier property, and has a relatively low mechanical strength at high temperature, and hence, studies are being made on using a hydrocarbon-based polymer electrolyte in place of a fluorine-based polymer electrolyte.
Patent Literature 3 to 8 all disclose electrolyte membrane laminates.

### Citation List

### Patent Literature

Patent Literature 1: JP2020-514528W
Patent Literature 2: JP2019-167619A

Patent Literature 3: JP 2015-117417 A
Patent Literature 4: JP 2019-061863 A
Patent Literature 5: WO 2020/196278 A1
Patent Literature 6: US 2006/068268 A1
Patent Literature 7: WO 2018/115821 A1
Patent Literature 8: CA 2522017 A1
Patent Literature 9: EP 3648218 A1
Patent Literature 10: JP 2004-006306 A

### SUMMARY OF INVENTION

### Technical Problem

An electrolyte membrane produced using a hydrocarbon-based electrolyte has a relatively good hydrogen-proof barrier property, compared with a fluorine-based electrolyte membrane, but it is important that the permeation of hydrogen to the anode is further decreased to continue the safety production of hydrogen. An attempt to decompose the permeating hydrogen was made by laminating the above-described platinum group metal containing-layer on an electrolyte membrane, but the adhesiveness between the electrolyte membrane and the platinum group metal containing-layer was low, revealing a problem with durability.

In view of this, a problem to be addressed by the present invention is to provide an electrolyte membrane laminate having an excellent hydrogen-proof barrier property and a good durability. Another problem to be addressed by the present invention is to provide a catalyst coated electrolyte membrane having an excellent hydrogen-proof barrier property and a good durability, and provide a method of producing the catalyst coated electrolyte membrane. Yet another problem to be addressed by the present invention is to provide a membrane electrode assembly having an excellent hydrogen-proof barrier property and a good durability. Yet another problem to be addressed by the present invention is to provide a water electrolysis hydrogen generator.

### Solution to Problem

To achieve the above-described objects, an electrolyte membrane laminate, which is defined in the appended claims, and which has the following constitution. That is, an electrolyte membrane laminate including: a first electrolyte membrane having a first main surface and a second main surface; and a first interlayer and a second electrolyte membrane in this order on the first main surface of the first electrolyte membrane; wherein the first electrolyte membrane contains a hydrocarbon-based polymer electrolyte, the first interlayer contains a polymer electrolyte and particles, and the second electrolyte membrane contains a polymer electrolyte and particles containing a transition metal element, wherein said transition metal element is selected from platinum, gold, silver, copper, palladium, ruthenium, rhodium, cerium, manganese, iridium, nickel, or cobalt, wherein a mass ratio, i.e. the mass of said particles containing a transition metal element / the mass of said polymer electrolyte, of said particles containing a transition metal element to said polymer electrolyte contained in said second electrolyte membrane is 0.01 to 0.85, and wherein said mass ratio of said particles to said polymer electrolyte contained in said first interlayer is 0.5 to 20.0.

To achieve the above-described objects, a catalyst coated electrolyte membrane according to the present invention has the following constitution. That is, a catalyst coated electrolyte membrane including a catalyst layer on each of both faces of the electrolyte membrane laminate, wherein a first catalyst layer is on the first main surface side of the first electrolyte membrane of the electrolyte membrane laminate, and a second catalyst layer is on the second main surface side of the first electrolyte membrane.

To achieve the above-described objects, a membrane electrode assembly according to the present invention has the following constitution. That is, a membrane electrode assembly including the catalyst coated electrolyte membrane.

To achieve the above-described objects, a water electrolysis hydrogen generator according to the present invention has the following constitution. That is, a water electrolysis hydrogen generator including the catalyst coated electrolyte membrane.

To achieve the above-described objects, a method of producing the catalyst coated electrolyte membrane according to the present invention has any one of the following constitutions. That is, a method of producing the catalyst coated electrolyte membrane, including: providing a laminate (L) containing a first electrolyte membrane and a first interlayer laminated on the first electrolyte membrane, a first catalyst layer transfer sheet (T_{C1}) containing a first catalyst layer and a second electrolyte membrane laminated in this order on a first support, and a second catalyst layer transfer sheet (T_{C2}) containing a second catalyst layer laminated on a second support; and bringing the first interlayer of the laminate (L) into contact with the second electrolyte membrane of the first catalyst layer transfer sheet (T_{C1}), and bringing the first electrolyte membrane of the laminate (L) into contact with the second catalyst layer of the second catalyst layer transfer sheet (T_{C2}), or a method of producing the catalyst coated electrolyte membrane, including: providing a laminate (L) containing a first electrolyte membrane and a first interlayer laminated on the first electrolyte membrane, a first catalyst layer transfer sheet (T_{C1}) containing a first catalyst layer and a second electrolyte membrane laminated in this order on a first support, and a second catalyst layer transfer sheet (T_{C3}) containing a second catalyst layer, a third electrolyte membrane, and a second interlayer laminated in this order on a second support; and bringing the first interlayer of the laminate (L) into contact with the second electrolyte membrane of the first catalyst layer transfer sheet (T_{C1}), and bringing the first electrolyte membrane of the laminate (L) into contact with the second interlayer of the second catalyst layer transfer sheet (T_{C3}).

The electrolyte membrane laminate according to the present invention preferably includes a third electrolyte membrane on the second main surface of the first electrolyte membrane.

It is preferable that the electrolyte membrane laminate according to the present invention includes the second interlayer between the second main surface of the first electrolyte membrane and the third electrolyte membrane, and that the second interlayer contains a polymer electrolyte and particles.

In the electrolyte membrane laminate according to the present invention, the polymer electrolyte(s) contained in the second electrolyte membrane and/or in the third electrolyte membrane preferably contain(s) a fluorine-based polymer electrolyte.

In the electrolyte membrane laminate according to the present invention, the particles containing a transition metal element and contained in the second electrolyte membrane and/or in the third electrolyte membrane are particles containing at least one transition metal element selected from platinum, gold, silver, copper, palladium, ruthenium, rhodium, cerium, manganese, iridium, nickel, or cobalt.

In the electrolyte membrane laminate according to the present invention, the particles containing a transition metal element and contained in the second electrolyte membrane and/or in the third electrolyte membrane preferably contain particles of at least one kind selected from zerovalent metal particles, metal oxide particles, or insoluble metal salt particles.

In the electrolyte membrane laminate according to the present invention, the mass ratio (the mass of the particles containing a transition metal element / the mass of the polymer electrolyte) of the particles containing a transition metal element to the polymer electrolyte contained in the second electrolyte membrane and/or in the third electrolyte membrane is 0.01 to 0.85.

In the electrolyte membrane laminate according to the present invention, the particles contained in the first interlayer and/or in the second interlayer are preferably inorganic particles.

In the electrolyte membrane laminate according to the present invention, the particles contained in the first interlayer and/or in the second interlayer are preferably particles containing a carbon atom.

In the electrolyte membrane laminate according to the present invention, the particles contained in the first interlayer and/or in the second interlayer are preferably carbon particles and/or metal-supporting carbon particles.

In the electrolyte membrane laminate according to the present invention, the particles contained in the first interlayer and/or in the second interlayer are preferably carbon particles.

In the electrolyte membrane laminate according to the present invention, the polymer electrolyte(s) contained in the first interlayer and/or in the second interlayer preferably contain(s) a fluorine-based polymer electrolyte.

In the electrolyte membrane laminate according to the present invention, the mass ratio (the mass of the particles / the mass of the polymer electrolyte) of the particles to the polymer electrolyte contained in the first interlayer is 0.5 to 20.0. In the electrolyte membrane laminate according to the present invention, the mass ratio (the mass of the particles / the mass of the polymer electrolyte) of the particles to the polymer electrolyte contained in the second interlayer is preferably 0.5 to 20.0.

In the electrolyte membrane laminate according to the present invention, the hydrocarbon-based polymer electrolyte contained in the first electrolyte membrane preferably contains an aromatic polyether-based polymer electrolyte.

In the catalyst coated electrolyte membrane according to the present invention, it is preferable that the first catalyst layer is an anode catalyst layer, and that the second catalyst layer is a cathode catalyst layer.

In the method of producing a catalyst coated electrolyte membrane according to the present invention, it is preferable that the first electrolyte membrane contains a hydrocarbon-based polymer electrolyte, and that a first joining layer contains a polymer electrolyte and inorganic particles.

In the method of producing a catalyst coated electrolyte membrane according to the present invention, the catalyst coated electrolyte membrane is preferably in the form of a long film.

### Advantageous Effects of Invention

The present invention can provide an electrolyte membrane laminate having an excellent hydrogen-proof barrier property and a good durability.

### DESCRIPTION OF EMBODIMENTS

Below, embodiments of the present invention will be described in detail, and the present invention is not limited to the below-described embodiments, but can be performed with various modifications within the scope of the claims, depending on the purpose or the use.

An electrolyte membrane laminate according to the present invention includes: a first electrolyte membrane containing a hydrocarbon-based polymer electrolyte; a first interlayer containing a polymer electrolyte and particles; and a second electrolyte membrane containing a polymer electrolyte and particles containing a transition metal element; the first interlayer and the second electrolyte membrane being in this order on a first main surface of this first electrolyte membrane, wherein said transition metal element is selected from platinum, gold, silver, copper, palladium, ruthenium, rhodium, cerium, manganese, iridium, nickel, or cobalt, wherein a mass ratio, i.e. the mass of said particles containing a transition metal element / the mass of said polymer electrolyte, of said particles containing a transition metal element to said polymer electrolyte contained in said second electrolyte membrane is 0.01 to 0.85, and wherein said mass ratio of said particles to said polymer electrolyte contained in said first interlayer is 0.5 to 20.0.

### [First Electrolyte Membrane]

The first electrolyte membrane contains a hydrocarbon-based polymer electrolyte. Here, the hydrocarbon-based polymer electrolyte is a hydrocarbon-based polymer having ionic groups. The hydrocarbon-based polymer having ionic groups refers to a polymer that has a main chain containing a hydrocarbon as a main constituent unit, and has ionic groups added to the main chain or a side chain, wherein the main chain or the side chain is substantially not fluorinated. Here, being substantially not fluorinated is intended not to exclude a polymer having a fluorinated portion in a small part of the main chain or the side chain, and specifically, such a polymer encompasses a hydrocarbon-based polymer the fluorine atom content of which is less than 5 mass% per the number-average molecular weight of the polymer.

For the hydrocarbon-based polymer electrolyte, an aromatic hydrocarbon-based polymer having an aromatic ring in the main chain is preferable. The above-described aromatic ring may contain not only a hydrocarbon-based aromatic ring but also a hetero ring. In addition, an aliphatic-based unit together with an aromatic ring unit may partially constitute the polymer.

Specific examples of the aromatic hydrocarbon-based polymer include polymers having, in the main chain, a structure selected from polysulfone, polyether sulfone, polyphenylene oxide, a polyarylene ether polymer, polyphenylene sulfide, polyphenylene sulfide sulfone, polyparaphenylene, a polyarylene polymer, polyarylene ketone, polyether ketone, polyarylene phosphine oxide, polyether phosphine oxide, polybenzoxazole, polybenzothiazole, polybenzimidazole, polyamide, polyimide, polyetherimide, and polyimidesulfone together with an aromatic ring. Note that polysulfone, polyether sulfone, polyether ketone, and the like as used herein are generic terms for structures having a sulfone bond, an ether bond, or a ketone bond in their molecular chain, encompass polyether ketone ketone, polyether ether ketone, polyether ether ketone ketone, polyether ketone ether ketone ketone, and polyether ketone sulfone. The hydrocarbon skeleton may have a plurality of structures out of these structures. Among these, in particular, a polymer having a polyether ketone skeleton, that is, a polyether ketone-based polymer is most preferable as an aromatic hydrocarbon-based polymer.

As a polymer electrolyte, an aromatic hydrocarbon-based polymer that forms a co-continuous or lamellar phase-separation structure is suitable. Such a phase-separation structure can be developed, for example, in the following: a molded product composed of two or more incompatible polymer blends such as of a hydrophilic polymer having an ionic group and a hydrophobic polymer having no ionic group; a block copolymer composed of two or more incompatible segments, such as a segment containing an ionic group (S_{E1}) and a segment containing no ionic group (S_{E2}); or the like. In a co-continuous and a lamellar phase-separation structure, a hydrophilic domain and a hydrophobic domain each form a continuous phase, thus allowing a continuous proton-conducting channel to be formed, and making it easier to obtain an electrolyte membrane having an excellent protonic conductivity. A continuous hydrophobic skeleton is simultaneously formed, thus, making it easier to obtain an electrolyte membrane having excellent mechanical characteristics not only in a dry state but also in a hydrous state. Here, the domain means a lump formed by the aggregation of similar substances or segments in one membrane.

A preferable polymer electrolyte is, in particular, a block copolymer having one or more segments containing an ionic group (S_{E1}) and one or more segments containing no ionic group (S_{E2}). Here, a segment is defined as a partial structure in the chain of a copolymer composed of a repeating unit that exhibits a specific property, the partial structure having a molecular weight of 2,000 or more. Using a block copolymer makes it possible to develop a co-continuous or lamellar phase-separation structure having a fine domain, compared with a polymer blend, and to achieve a more excellent power-generating performance, hydrogen-generating efficiency, and physical durability.

Hereinafter, a segment (S_{E1}) or polymer containing an ionic group is referred to as an "ionic block" in some cases, and in addition, a segment (S_{E2}) or polymer containing no ionic group is referred to as a "nonionic block" in some cases. However, the expression "containing no ionic group" as used herein does not exclude an aspect in which the segment or polymer contains an ionic group in a small amount to the extent that the formation of a phase-separation structure is not impaired.

For such a block copolymer, the molar compositional ratio (S_{E1}/S_{E2}) of the ionic block to the nonionic block is preferably 0.20 or more, more preferably 0.33 or more, still more preferably 0.50 or more. In addition, the molar compositional ratio (S_{E1}/S_{E2}) is preferably 5.00 or less, more preferably 3.00 or less, still more preferably 2.50 or less. The molar compositional ratio (S_{E1}/S_{E2}) of 0.20 or more or 5.00 or less makes it possible to obtain a composite polymer electrolyte membrane having a high protonic conductivity under low-humidity conditions, and in addition, an excellent hot-water resistance and physical durability. Here, the molar compositional ratio (S_{E1}/S_{E2}) refers to the ratio of the number of moles of the repeating unit present in an ionic block to the number of moles of the repeating unit present in a nonionic block. The "number of moles of the repeating unit" is a value obtained by dividing the number-average molecular weight of each of the ionic block and the nonionic block by the molecular weight of each of the respective corresponding constituent units.

The ionic group possessed by the polymer electrolyte can be an ionic group having either a cation exchange ability or an anion exchange ability. Examples of such a functional group to be preferably used include a sulfonic group, sulfonimide group, sulfate group, phosphonic group, phosphate group, carboxylate group, ammonium group, phosphonium group, and amino group. The polymer can contain two or more kinds of ionic groups. Among these, the polymer more preferably has at least one selected from a sulfonic group, sulfonimide group, or sulfate group from the viewpoint of excellent water electrolysis capability, and most preferably has a sulfonic group from the viewpoint of raw material cost.

The ion exchange capacity (IEC) of the polymer electrolyte is preferably 0.1 meq/g or more and 5.0 meq/g or less from the viewpoint of a balance between protonic conductivity and water resistance. The IEC is more preferably 1.0 meq/g or more, still more preferably 1.4 meq/g or more. In addition, the IEC is more preferably 3.5 meq/g or less, still more preferably 3.0 meq/g or less. The IEC of 0.1 meq/g or more and 5.0 meq/g or less makes it possible to achieve both excellent protonic conductivity and water resistance.

Here, the IEC is the molar amount of the ionic group introduced per the unit dry weight of the polymer electrolyte. A large value of this represents a larger amount of the ionic group introduced. In the present invention, the IEC is defined as a value determined by a neutralization titration method. The IEC in accordance with neutralization titration can be calculated by the method described in the Examples section.

In the present invention, an aromatic hydrocarbon-based block copolymer is particularly preferably used as the polymer electrolyte from the viewpoint of the efficiency of hydrogen generation in a water electrolysis hydrogen generator, and a polyether ketone-based block copolymer is more preferable. In particular, such a polyether ketone-based block copolymer containing a segment containing a constituent unit (S1) containing an ionic group and a segment containing a constituent unit (S2) containing no ionic group, as below-described, can be particularly preferably used.

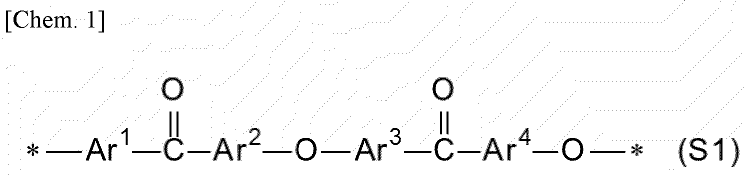

In the general formula (S1), Ar¹ to Ar⁴ represent an arbitrary divalent arylene group, Ar¹ and/or Ar² contain(s) an ionic group, and Ar³ and Ar⁴ may contain or optionally do not contain an ionic group. Ar¹ to Ar⁴ may be optionally substituted, and may each independently two or more arylene groups. The symbol * represents a binding site with the general formula (S1) or with another constituent unit.

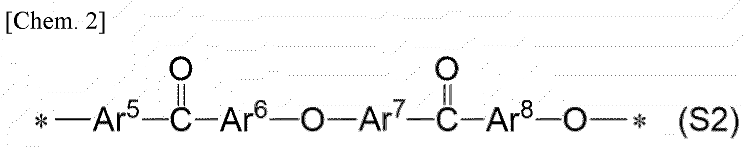

In the general formula (S2), Ar⁵ to Ar⁸ represent an arbitrary divalent arylene group, and may be optionally substituted, but contain no ionic group. Ar⁵ to Ar⁸ may each independently two or more arylene groups. The symbol * represents a binding site with the general formula (S2) or with another constituent unit.

Here, examples of the divalent arylene group preferable for Ar¹ to Ar⁸ include, but are not limited to: hydrocarbon-based arylene groups such as a phenylene group, naphthylene group, biphenylene group, and fluorenediyl group; and heteroarylene groups such as pyridinediyl, quinoxalinediyl, and thiophenediyl; and the like. Here, the phenylene group can encompass three kinds thereof, that is, an *o*-phenylene group, *m*-phenylene group, and *p*-phenylene group, in accordance with the position having a binding site between a benzene ring and another constituent unit, but is used as the generic term for these three kinds unless otherwise specified herein. The same applies to another divalent arylene group, such as a naphthylene group or a biphenylene group. Ar¹ to Ar⁸ are preferably a phenylene group and a phenylene group containing an ionic group, most preferably a *p*-phenylene group and a*p-*phenylene group containing an ionic group. In addition, Ar⁵ to Ar⁸ may be substituted with a group other than an ionic group, more preferably unsubstituted, from the viewpoints of protonic conductivity, chemical stability, and physical durability.

In addition, to obtain sufficient dimensional stability, mechanical strength, physical durability, fuel blocking properties, and solvent resistance, the polymer electrolyte is preferably an aromatic hydrocarbon-based polymer having crystallinity. Here, "having crystallinity" means having a property of crystallizability, that is, a possibility of being crystallized by heating, or means being already crystallized.

Whether the polymer electrolyte has crystallinity is verified by differential scanning calorimetry (DSC) or wide-angle X-ray diffraction. In the present invention, it is preferable that the heat of crystallization is 0.1 J/g or more, as measured by DSC after the formation of the membrane, or that the crystallinity is 0.5% or more, as measured by wide-angle X-ray diffraction. In other words, that no crystallization peak is observed in DSC is considered to be that the polymer electrolyte is already crystallized or amorphous. In the case of being already crystallized, the crystallinity is 0.5% or more by wide-angle X-ray diffraction.

With an aromatic hydrocarbon-based polymer having crystallinity, the electrolyte membrane has a poor processability in some cases. In such a case, the aromatic hydrocarbon-based polymer may have a protecting group introduced therein, and be temporarily inhibited from being crystalline. Specifically, the polymer with a protecting group introduced therein is formed into a membrane, and then deprotected. Thus, the aromatic hydrocarbon-based polymer having crystallinity can be used as a polymer electrolyte in the present invention.

The first electrolyte membrane may be reinforced with a porous base material. Examples of the form of the porous base material include woven fabrics, nonwoven fabrics, porous films, mesh fabrics, and the like. Examples of the porous base material include: a hydrocarbon-based porous base material containing a hydrocarbon-based polymer compound as a main component; a fluorine-based porous base material containing a fluorine-based polymer compound as a main component; and the like.

Examples of the hydrocarbon-based polymer compound include polyethylene (PE), polypropylene (PP), polystyrene (PS), polyacrylate, polymethacrylate, polyvinyl chloride (PVC), polyvinylidene chloride (PVdC), polyester, polycarbonate (PC), polysulfone (PSU), polyether sulfone (PES), polyphenylene oxide (PPO), polyarylene ether polymers, polyphenylene sulfide (PPS), polyphenylene sulfide sulfone, polyparaphenylene (PPP), polyarylene polymers, polyarylene ketone, polyether ketone (PEK), polyarylene phosphine oxide, polyether phosphine oxide, polybenzoxazole (PBO), polybenzothiazole (PBT), polybenzimidazole (PBI), polyamide (PA), polyimide (PI), polyetherimide (PEI), polyimidesulfone (PIS), and the like.

Examples of the fluorine-based polymer compound include polytetrafluoroethylene (PTFE), polyhexafluoropropylene, tetrafluoroethylene-hexafluoropropylene copolymers (FEP), ethylene-tetrafluoroethylene copolymers (ETFE), polyvinylidene fluoride (PVdF), polychlorotrifluoroethylene (PCTFE), perfluoroalkoxyfluororesins (PFA), ethylene-chlorotrifluoroethylene copolymers (ECTFE), and the like.

The first electrolyte membrane can contain any of various additives, for example, a surfactant, radical scavenger, hydrogen peroxide decomposer, nonelectrolyte polymer, elastomer, filler, or the like to the extent that the effects of the present invention are not impaired.

The first electrolyte membrane suitably has a thickness of approximately 1 to 1,000 µm, preferably 5 to 500 µm. In a case where an electrolyte membrane laminate according to the present invention is used for a water electrolysis hydrogen generator, the first electrolyte membrane preferably has a comparatively larger thickness, and specifically, the thickness is preferably 30 µm or more, more preferably 50 µm or more, particularly preferably 70 µm or more.

### [First Interlayer]

The first interlayer contains a polymer electrolyte and particles. The first interlayer has the capability to enhance the adhesiveness between the first electrolyte membrane and the second electrolyte membrane, that is, the capability to serve as a joining layer.

The first interlayer can be formed as follows: to a polymer electrolyte solution, specific particles are further added to form a coating liquid for the interlayer; and the coating liquid is laminated on the first electrolyte membrane by the below-described coating method or transferring method to form the first interlayer.

Examples of the polymer electrolyte contained in the first interlayer include the above-described hydrocarbon-based polymer electrolyte and fluorine-based polymer electrolyte. Among these, a fluorine-based polymer electrolyte is preferable from the viewpoint of enhancing the joining capability.

In the fluorine-based polymer electrolyte, the fluorine-based polymer means a polymer in the molecule of which the majority or all of the hydrogen atoms in an alkyl group and/or in an alkylene group are replaced with a fluorine atom.

Examples of the fluorine-based polymer electrolyte include perfluorocarbonsulfonic polymers, perfluorocarbonphosphonic polymers, trifluorostyrenesulfonic polymers, trifluorostyrenephosphonic polymers, ethylenetetrafluoroethylene-g-styrenesulfonic polymers, ethylene-tetrafluoroethylene copolymers, polyvinylidene fluoride-perfluorocarbonsulfonic polymers, and the like.

Among these, perfluorocarbonsulfonic acid-based polymers are preferable from the viewpoints of heat resistance, chemical stability, and the like. Examples of such a polymer include commercially available products such as "Nafion" (registered trademark) (manufactured by The Chemours Company), "FLEMION" (registered trademark) (manufactured by AGC Inc.), and "ACIPLEX" (registered trademark) (manufactured by Asahi Kasei Corporation).

Examples of the particles contained in the first interlayer include inorganic particles, organic particles, organic-inorganic composite particles, and the like.

Examples of the inorganic particles include carbon particles, silica, titanium oxide, aluminium oxide, zirconium oxide, manganese oxide, cobalt oxide, cerium oxide, yttrium oxide, hafnium oxide, tungsten oxide, silicon nitride, aluminium nitride, silicon carbide, calcium carbonate, zeolite, mica, sericite, sericite, kaolin clay, kaolin, mica, talc, montmorillonite, and the like. These inorganic particles may be metal-supporting particles. Examples of such metal-supporting particles include carbon particles, silica particles, and the like on which a platinum group metal (platinum, ruthenium, rhodium, palladium, osmium, or iridium) is supported.

Examples of the organic particles include various resin particles. Examples of a resin constituting such resin particles include thermoplastic resins and thermosetting resins such as polyethylene resins, polypropylene resins, polyvinyl acetate-based resins, poly(meth)acryl-based resins, polyvinyl chloride-based resins, polystyrene-based resins, polycarbonate-based resins, polyester-based resins, polyphenylene sulfide-based resins, polyamide-based resins, polyimide-based resins, polyurethane-based resins, ethylene-(meth)acryl acid ester-based copolymer, ABS resins, fluorine-based resins, epoxy-based resins, phenol-based resins, melamine-based resins, guanamine resins, polyazole-based resins, polyether sulfone-based resins, and polyether ketone-based resins.

Examples of the organic-inorganic composite particles include acryl-silica composite particles, melamine-silica composite particles, benzoguanamine-silica composite particles, benzoguanamine-melamine-silica composite particles, polystyrene-silica composite particles, silsesquioxane-based organic-inorganic hybrid particles, organic substance-coated inorganic nanoparticles, and the like.

The particles contained in the first interlayer conceivably enhance the adhesiveness between the first electrolyte membrane and the second electrolyte membrane by functioning as an anchor-forming material having an anchor effect to thereby join the first interlayer with the first electrolyte membrane, and join the first interlayer with the second electrolyte membrane. In particular, the surface of the first electrolyte membrane is comparatively smooth, and thus, laminating the second electrolyte membrane directly on the surface of the first electrolyte membrane does not afford sufficient adhesiveness in some cases, but interposing the first interlayer solves the problem with adhesiveness.

In addition, among the hydrocarbon-based polymer electrolytes to be each contained in the first electrolyte membrane, an aromatic hydrocarbon-based block copolymer is a high-durability material having a comparatively high hydrogen-generating efficiency and an excellent mechanical strength, but on the other hand, is a high-elastic-modulus and low-solubility material having a comparatively high crystallinity, and thus, tends to have a lower adhesiveness with the second electrolyte membrane. However, interposing the first interlayer solves the problem with adhesiveness.

From the viewpoint of the above-described anchor effect, the particles contained in the first interlayer preferably have a higher elastic modulus than the hydrocarbon-based polymer electrolyte contained in the first electrolyte membrane. In addition, particles having a higher melting point than the glass transition temperature of the carbon-based polymer electrolyte contained in the first electrolyte membrane, or particles that do not melt are suitable. Such particles are preferably inorganic particles, thermoplastic resin particles having a high melting point, thermosetting resin particles, or organic-inorganic composite particles, particularly preferably inorganic particles.

Among the above-described inorganic particles, carbon particles, metal-supporting carbon particles, aluminium oxide particles, zirconium oxide particles, cerium oxide particles, and hafnium oxide particles are preferable because of being comparatively stable against acid and alkali. Carbon particles, aluminium oxide particles, zirconium oxide particles, cerium oxide particles, and hafnium oxide particles are more preferable because of being comparatively stable against an oxidation-reduction reaction and having an excellent chemical durability. Carbon particles, aluminium oxide particles, and zirconium oxide particles are still more preferable because of being comparatively inexpensive and available. Carbon particles are particularly preferable because of making it easier to form a uniform interlayer. Examples of the carbon particles include carbon black, graphite, activated carbon, carbon nanotubes, carbon nanofibers, fullerene, and the like. Examples of the metal-supporting carbon particles include carbon particles on which a metal such as a platinum group metal (platinum, ruthenium, rhodium, palladium, osmium, or iridium), iron, lead, gold, silver, copper, chromium, cobalt, nickel, manganese, vanadium, molybdenum, gallium, or aluminium is supported.

The average particle size of the particles is preferably 5 nm or more, more preferably 10 nm or more, particularly preferably 20 nm or more, from the viewpoints of dispersibility, a membrane-forming property, and a joining capability. In addition, the average particle diameter is preferably 1,000 nm or less, more preferably 500 nm or less, particularly preferably 300 nm or less.

In the first interlayer, the mass ratio of the particles to the polymer electrolyte (the mass of the particles / the mass of the polymer electrolyte) is 0.5 or more, preferably 0.7 or more. In addition, the ratio is 20.0 or less, preferably 10.0 or less, particularly preferably 7.0 or less. The above-described mass ratio makes it possible to produce an interlayer that excels in both joining capability and ion-conduction resistance.

The first interlayer can contain any of various additives, for example, a surfactant, radical scavenger, hydrogen peroxide decomposer, nonelectrolyte polymer, elastomer, or the like to the extent that the effects of the present invention are not impaired.

The solid basis weight of the first interlayer is preferably 0.05 mg/cm² or more, more preferably 0.1 mg/cm² or more, particularly preferably 0.2 mg/cm² or more. In addition, the solid basis weight is preferably 5.0 mg/cm² or less, more preferably 3.0 mg/cm² or less, particularly preferably 2.0 mg/cm² or less. The above-described solid basis weight makes it possible to produce an interlayer that excels in both joining capability and ion-conduction resistance.

### [Second Electrolyte Membrane]

The second electrolyte membrane contains a polymer electrolyte and particles containing a transition metal element. The second electrolyte membrane has the capability to prevent hydrogen from migrating from a cathode to an anode (hydrogen-decomposing capability). That is, the catalysis of the particles containing a transition metal element and contained in the second electrolyte membrane is utilized to allow the hydrogen permeating and diffusing through the electrolyte membrane to react with oxygen and be removed in the form of water, thus decreasing the concentration of hydrogen at the anode.

The second electrolyte membrane is formed as follows: to a polymer electrolyte solution, particles containing a transition metal element are further added to form a coating liquid for the second electrolyte membrane; and the coating liquid is laminated on the first interlayer by a coating method or a transferring method to form the second electrolyte membrane.

As the polymer electrolyte contained in the second electrolyte membrane, the above-described hydrocarbon-based polymer electrolyte or fluorine-based polymer electrolyte can be used. Among these, the fluorine-based polymer electrolyte is preferable from the viewpoint of the adhesiveness with the below-described catalyst layer.

The particles containing a transition metal element and contained in the second electrolyte membrane are particles containing at least one transition metal element selected from platinum, gold, silver, copper, palladium, ruthenium, rhodium, cerium, manganese, iridium, nickel, or cobalt. In addition, the particles containing a transition metal element preferably contain particles of at least one kind selected from zerovalent metal particles, metal oxide particles, or insoluble metal salt particles. Specific examples of the above-described zerovalent metal particles include: single-kind particles composed of one kind of zerovalent metal element such as above-described; or alloy particles composed of a plurality of kinds of metal elements. Examples of the metal oxide particles include: particles composed of particles of one kind selected from gold oxide, silver oxide, copper oxide, palladium oxide, ruthenium oxide, rhodium oxide, cerium oxide, manganese oxide, iridium oxide, nickel oxide, and cobalt oxide; composite particles containing a plurality of kinds of oxides such as above-described; and the like. Here, the copper oxide is considered to encompass two kinds of compounds, that is, copper oxide (I) and copper oxide (II), depending on the valence of copper, and is used as the generic term for these two kinds in the present invention. The same applies to another oxide such as ruthenium oxide or manganese oxide, and to the below-described insoluble metal salt. Examples of the insoluble metal salt include silver chloride, silver sulfate, silver carbonate, silver phosphate, basic copper carbonate, copper phosphate, palladium sulfate, cerium sulfate, cerium carbonate, cerium phosphate, manganese carbonate, manganese phosphate, iridium chloride, cobalt sulfate, cobalt phosphate, and the like.

An aspect in which particles containing a transition metal are further supported on inorganic particles, organic particles, or organic-inorganic composite particles is also preferable. As the inorganic particles, organic particles, or organic-inorganic composite particles in this case, the same particles as for the interlayer can be used.

In the second electrolyte membrane, the mass ratio of the particles containing a transition metal element to the polymer electrolyte (the mass of the particles containing a transition metal element / the mass of the polymer electrolyte) is 0.01 or more, preferably 0.03 or more, particularly preferably 0.05 or more. In addition, the ratio is 0.85 or less, preferably 0.7 or less, particularly preferably 0.5 or less. The above-described range makes it possible to produce an electrolyte membrane laminate that excels in both a hydrogen-blocking property and ion-conduction resistance.

The second electrolyte membrane can contain any of various additives, for example, a surfactant, radical scavenger, hydrogen peroxide decomposer, nonelectrolyte polymer, elastomer, filler, or the like to the extent that the effects of the present invention are not impaired.

The thickness of the second electrolyte membrane is preferably 0.1 µm or more, more preferably 0.5 µm or more, particularly preferably 1 µm or more. In addition, the thickness is preferably 20 µm or less, more preferably 10 µm or less, particularly preferably 7 µm or less. The above-described range makes it possible to produce an electrolyte membrane laminate that excels in both a hydrogen-blocking property and ion-conduction resistance.

### [Third Electrolyte Membrane]

In the electrolyte membrane laminate according to the present invention, a third electrolyte membrane can be disposed on the second main surface of the first electrolyte membrane. The third electrolyte membrane preferably has a hydrogen-decomposing capability as the above-described second electrolyte membrane does. From this viewpoint, the third electrolyte membrane preferably has the same constitution as the second electrolyte membrane does. Providing the third electrolyte membrane further enhances the hydrogen-proof barrier property.

The third electrolyte membrane is formed as follows: to a polymer electrolyte solution, particles containing a transition metal element are further added to form a coating liquid for the third electrolyte membrane; and the coating liquid is laminated on the second main surface of the first electrolyte membrane or the second interlayer by a coating method or a transferring method to form the third electrolyte membrane.

### [Second Interlayer]

In a case where the third electrolyte membrane is disposed as above-described in an electrolyte membrane laminate according to the present invention, the second interlayer is preferably provided between the second main surface of the first electrolyte membrane and the third electrolyte membrane. Here, the second interlayer preferably functions as a joining layer in the same manner as the above-described first interlayer. From this viewpoint, the second interlayer preferably has the same constitution as the first interlayer does.

As below-described, the second interlayer is formed by laminating a coating liquid for the interlayer on the second main surface of the first electrolyte membrane by a coating method or a transferring method.

### [Catalyst Coated Electrolyte Membrane]

An electrolyte membrane laminate according to the present invention can have a catalyst layer disposed on each of both faces thereof, and be thus formed into a catalyst coated electrolyte membrane. That is, the catalyst coated electrolyte membrane includes a catalyst layer on each of both faces of an electrolyte membrane laminate according to the present invention (hereinafter referred to as an "electrolyte membrane laminate" in some cases). Specifically, the catalyst coated electrolyte membrane includes a first catalyst layer and a second catalyst layer on the first main surface side of a first electrolyte membrane of the electrolyte membrane laminate and on the second main surface side of the first electrolyte membrane respectively. Here, it is preferable that the first catalyst layer is an anode catalyst layer, and that the second catalyst layer is a cathode catalyst layer.

Examples of a preferable form of a catalyst coated electrolyte membrane in the present invention include the following constitutions.
i) First catalyst layer (anode catalyst layer)/second electrolyte membrane/first interlayer/first electrolyte membrane/second catalyst layer (cathode catalyst layer)
ii) First catalyst layer (anode catalyst layer)/second electrolyte membrane/first interlayer/first electrolyte membrane/second interlayer/third electrolyte membrane/second catalyst layer (cathode catalyst layer)

### [Catalyst Layer]

The catalyst layer is commonly a layer containing catalyst particles and a polymer electrolyte. The catalyst layer is formed as follows: to a polymer electrolyte solution, catalyst particles are further added to form a coating liquid for the catalyst layer; and the coating liquid is laminated on an electrolyte membrane laminate according to the present invention by a coating method or a transferring method to form the catalyst layer. A polymer electrolyte that is commonly used is such a fluorine-based polymer electrolyte as above-described, and a perfluorocarbonsulfonic acid-based polymer is preferably used from the viewpoints of gas diffusivity and chemical durability.

Examples of catalyst particles to be commonly used include: particles of a metal such as an element of the platinum group (platinum, ruthenium, rhodium, palladium, osmium, or iridium), iron, lead, gold, silver, copper, chromium, cobalt, nickel, manganese, vanadium, molybdenum, gallium, or aluminium; an alloy, oxide, or multiple oxide thereof; or the like. In addition, carbon particles on which the above-described metal is supported (catalyst-supporting carbon particles) are also commonly used. The above-described carbon particles are not particularly limited as long as the carbon particles are microparticulate and electroconductive and are not corroded or deteriorated by a reaction with a catalyst, and particles of carbon black, graphite, activated carbon, carbon fiber, carbon nanotubes, and fullerene can be preferably used.

In the catalyst layer, the mass ratio of the amount of the catalyst particles to the amount of the polymer electrolyte (the mass of the catalyst particles / the polymer electrolyte) is commonly in the range of from 0.5 to 15, preferably 1 or more, more preferably 1.5 or more. In addition, the ratio is preferably 13 or less, more preferably 11 or less.

The thickness of the catalyst layer is preferably 0.1 µm or more, more preferably 0.5 µm or more, particularly preferably 1 µm or more, from the viewpoints of gas diffusivity and durability. In addition, the thickness is preferably 500 µm or less, more preferably 100 µm or less, particularly preferably 30 µm or less.

The first catalyst layer (anode catalyst layer) and the second catalyst layer (cathode catalyst layer) may be constituted by the same material, or may be constituted by different materials. In a case where the catalyst coated electrolyte membrane is used for a water electrolysis hydrogen generator, a catalyst that generates oxygen with water or a hydroxide used as a raw material can be used for the catalyst particles in the first catalyst layer (anode catalyst layer). A catalyst that is preferably used is a noble metal such as iridium, ruthenium, rhodium, or palladium, or an oxide thereof. In this case, the catalyst particles can be mixed as single particles with an ionomer to be formed into a catalyst layer, or can be supported on titanium oxide or the like, and mixed with an ionomer to be formed into a catalyst layer. For the catalyst particles of the second catalyst layer (cathode catalyst layer), a catalyst that generates hydrogen with protons or water used a raw material can be used, and platinum-supporting carbon particles are preferably used.

### [Membrane Electrode Assembly]

The membrane electrode assembly contains the above-described catalyst coated electrolyte membrane and gas diffusion layers (gas diffusion electrodes) disposed on both faces of the membrane. Specifically, the membrane electrode assembly has a first gas diffusion layer (anode gas diffusion layer) and a second gas diffusion layer (cathode gas diffusion layer) disposed and joined on the first catalyst layer (anode catalyst layer) side of the catalyst coated electrolyte membrane and on the second catalyst layer (cathode catalyst layer) side respectively.

The gas diffusion layer is commonly constituted by a member having gas permeability and electron conductivity, for example, a carbon porous material or a metal porous material. Examples of the carbon porous material include carbon paper, carbon cloth, carbon mesh, carbon nonwoven fabric, and the like. Examples of the metal porous material include a metal mesh, foam metal, metal fabric, sintered metal material, metal nonwoven fabric, and the like. Examples of this metal include titanium, aluminium and an alloy thereof, nickel and an alloy thereof, copper and an alloy thereof, silver, a zinc alloy, a lead alloy, niobium, tantalum, iron, stainless steel, gold, platinum, and the like.

The gas diffusion layer can undergo the following: a water-repellent treatment to prevent a decrease caused in the diffusion and permeability of gas by any retention of water; a partial water-repellent treatment and a partial hydrophilization to form an emitting passage of water; the addition of carbon powder to decrease resistance; or the like. In addition, an electroconductive interlayer containing at least an inorganic electroconductive substance and a hydrophobic polymer can be provided on the catalyst coated electrolyte membrane side of the gas diffusion layer. In particular, in a case where the gas diffusion layer is constituted by carbon fiber fabric or nonwoven fabric that has a large porosity, providing an electroconductive interlayer can inhibit the performance of the gas diffusion layer from being decreased by the infiltration of a catalyst solution into the gas diffusion layer.

The thickness of the gas diffusion layer is preferably 50 µm or more, more preferably 100 µm or more, particularly preferably 150 µm or more. In addition, the thickness is preferably 1,000 µm or less, more preferably 700 µm or less, particularly preferably 500 µm or less.

The first gas diffusion layer (anode gas diffusion layer) and the second gas diffusion layer (cathode gas diffusion layer) may be constituted by the same material, or may be constituted by different materials. In a case where a membrane electrode assembly is used for a water electrolysis hydrogen generator, the first gas diffusion layer (anode gas diffusion layer) and the second gas diffusion layer (cathode gas diffusion layer) are preferably constituted by different materials. For example, it is preferable that the first gas diffusion layer (anode gas diffusion layer) is constituted by a metal porous material, and that the second gas diffusion layer (cathode gas diffusion layer) is constituted by a carbon porous material.

### [Method of Producing Electrolyte Membrane Laminate]

Below, a method of producing the electrolyte membrane laminate will be described, and the present invention is not limited to the producing method.

First, a method of producing the first electrolyte membrane will be described. The first electrolyte membrane can be produced, for example, by coating a membrane-formation base material with a polymer electrolyte solution, and drying the solution. Examples of the above-described membrane-formation base material include: polyolefins such as polyethylene and polypropylene; polyesters such as polyethylene terephthalate, polyethylene naphthalate, and polybutylene terephthalate; polycarbonate; polyetherimide; polyphenylene sulfide; polyimide; polystyrene; polytetrafluoroethylene; polyvinylidene fluoride; ethylene-tetrafluoroethylene copolymers; perfluoro-alkoxy fluororesins; and the like. Among these, polyesters are preferable, and polyethylene terephthalate is particularly preferable, from the viewpoints of chemical resistance, heat resistance, and price. The membrane-formation base material is to be finally peeled off to be removed, and may undergo a release treatment, if needed. The thickness of the membrane-formation base material is preferably 30 to 1,000 µm, more preferably 50 to 800 µm, particularly preferably 100 to 600 µm.

Examples of a method that can be used for the above-described coating includes knife coating, direct roll coating, Meyer bar coating, gravure coating, reverse coating, air knife coating, spray coating, brush coating, dip coating, die coating, vacuum die coating, curtain coating, flow coating, spin coating, screen printing, inkjet coating, and the like.

The first electrolyte membrane may be what is called a "composite membrane" reinforced with a porous base material, and this composite membrane preferably has a polymer electrolyte layer on one or both of the faces of the porous base material impregnated with a polymer electrolyte. Examples of a method of producing the above-described composite membrane include a method in which a porous base material is attached to and impregnated with a polymer electrolyte solution applied to a membrane-formation base material, and furthermore, the porous base material is coated with a polymer electrolyte solution, which is then dried.

In addition, examples of a polymer electrolyte that can be used include a salt formed by an ionic group with a cation of an alkali metal or an alkaline earth metal. In this case, it is preferable that, after the electrolyte membrane or the composite membrane is formed on the membrane-formation base material, an acid treatment is performed to exchange the cation of the alkali metal or the alkaline earth metal with a proton. Here, a known method can be adopted as the acid treatment.

An electrolyte membrane laminate according to the present invention is produced by laminating the first interlayer and the second electrolyte membrane on the first electrolyte membrane produced as above-described. A laminating method that can be adopted is, for example, a coating method or a combination of a coating method and a transferring method. Examples of such a method include the following methods:
i) a method in which, on a first electrolyte membrane formed on a membrane-formation base material, a coating liquid for a first interlayer and a coating liquid for a second electrolyte membrane are laminated in this order by coating;
ii) a method in which, on a first electrolyte membrane formed on a membrane-formation base material, a coating liquid for a first interlayer is laminated by coating, and then, a second electrolyte membrane is laminated by a transferring method;
iii) a method in which, on a first electrolyte membrane formed on a membrane-formation base material, a first interlayer and a second electrolyte membrane are laminated in this order by a transferring method;
iv) a method in which, on a first electrolyte membrane formed on a membrane-formation base material, a first interlayer is laminated by a transferring method, and then, a coating liquid for a second electrolyte membrane is laminated by coating; and
v) a method in which, on a first electrolyte membrane formed on a support, a laminate of a first interlayer and a second electrolyte membrane is laminated by a transferring method.

The transferring method in ii) to v) above includes providing a transfer sheet T1 in which the second electrolyte membrane is laminated on the support and/or a transfer sheet T2 in which the first interlayer is laminated on the support or a transfer sheet T3 in which the second electrolyte membrane and the first interlayer are laminated in this order on the support; ii) above is a method in which the first interlayer and the second electrolyte membrane of the transfer sheet T1 are brought into contact with each other to transfer the second electrolyte membrane onto the first interlayer; iii) above is a method in which the first electrolyte membrane and the first interlayer of the transfer sheet T2 are brought into contact with each other to transfer the first interlayer onto the first electrolyte membrane, then the support is peeled off, and the first interlayer and the second electrolyte membrane of the transfer sheet T1 are brought into contact with each other to transfer the second electrolyte membrane onto the first interlayer; iv) above is a method in which the first electrolyte membrane and the first interlayer of the transfer sheet T2 are brought into contact with each other to transfer the first interlayer onto the first electrolyte membrane, then the support of the first interlayer is peeled off, and the coating liquid for the second electrolyte membrane is applied to the support side surface of the first interlayer exposed; and v) above is a method in which the first electrolyte membrane and the first interlayer of the transfer sheet are brought into contact with each other to transfer the first interlayer and the second electrolyte membrane onto the first electrolyte membrane. As the support for the first interlayer and the second electrolyte membrane, the same plastic film as the above-described membrane-formation base material can be used.

The above-described producing methods are examples of a method of producing a "laminate 1" in which the first interlayer and the second electrolyte membrane are laminated on the first main surface of the first electrolyte membrane. In the case of a "laminate 2" in which the second interlayer and the third electrolyte membrane are laminated on the second main surface of the first electrolyte membrane, the membrane-formation base material is peeled off from the laminate 1 having the membrane-formation base material therewith and obtained in any of i) to iv) above, and the second interlayer and the third electrolyte membrane can be laminated on the peeled face (the second main surface of the first electrolyte membrane) by any of the same methods as i) to iv) above.

In addition, another method is suitable, in which method, from the laminate 1 having the membrane-formation base material therewith, the membrane-formation base material is peeled off to expose the first main surface and the second main surface of the first electrolyte membrane, to both of which faces any of the same methods as i) to iv) above is applied simultaneously or sequentially, whereby the "laminate 2" is obtained, in which laminate 2 the first interlayer and the second electrolyte membrane are laminated in this order on the first main surface, and the second interlayer and the third electrolyte membrane are laminated in this order on the second main surface.

In addition, in the method of producing the laminate 2, and before the second interlayer is laminated before or after the membrane-formation base material is peeled off from the laminate 1 having the membrane-formation base material therewith, another support can be laminated on the second electrolyte membrane side of the laminate 1 to reinforce the laminate 1. As another support, the same plastic film as the above-described membrane-formation base material can be used.

### [Method of Producing Catalyst Coated Electrolyte Membrane]

Examples of a method of laminating the catalyst layer on the electrolyte membrane laminate according to the present invention include a coating method, a transferring method, and a combination of a coating method and a transferring method. These methods are not particularly limited, and a known method can be adopted.

In a coating method, the electrolyte membrane laminate can be coated with a coating liquid for a catalyst layer, using the above-described coating method. Specific examples of such a method include a method in which a coating liquid for the first catalyst layer is applied to the second electrolyte membrane side of the electrolyte membrane laminate, and dried to form an anode catalyst layer, and in which a coating liquid for the second catalyst layer is applied to the opposite face of the electrolyte membrane laminate, and dried to form a cathode catalyst layer. The anode catalyst layer and the cathode catalyst layer may be laminated in the reverse order to that which is above-described. In a case where a coating method is adopted, the membrane-formation base material is preferably laminated preliminarily on the opposite face of the electrolyte membrane laminate from the face to which a coating liquid for the catalyst layer is to be applied. Hereinafter, the first catalyst layer and the second catalyst layer are referred to as an anode catalyst layer and a cathode catalyst layer respectively in some cases.

Examples of the transferring method include a method in which an anode catalyst layer transfer sheet (anode catalyst decal) containing a support with an anode catalyst layer laminated thereon and a cathode catalyst layer transfer sheet (cathode catalyst decal) containing a support with a cathode catalyst layer laminated thereon are provided, and the anode catalyst layer transfer sheet and the cathode catalyst layer transfer sheet are attached to the second electrolyte membrane side of the electrolyte membrane laminate and the opposite side of the electrolyte membrane laminate respectively, and the resulting laminate is hot-pressed to transfer the anode catalyst layer and the cathode catalyst layer respectively. As the support, the same plastic film as the above-described support can be used.

Examples of a combination of a coating method and a transferring method include a method in which a coating liquid for the anode catalyst layer is first applied to the second electrolyte membrane side of the electrolyte membrane laminate, and dried to form an anode catalyst layer, the cathode catalyst layer transfer sheet is attached to the opposite face of the electrolyte membrane laminate, and the resulting laminate is hot-pressed to transfer the cathode catalyst layer. Such a method may be one in which, in the reverse order to that which is above-described, the coating liquid for the cathode catalyst layer is applied to transfer the anode catalyst layer.

### [Combined Method of Producing Electrolyte Membrane Laminate and Catalyst Coated Electrolyte Membrane]

The combined producing method is a producing method in which an electrolyte membrane laminate is completed in a step of producing a catalyst coated electrolyte membrane. A method of producing a "first catalyst layer (anode catalyst layer)/second electrolyte membrane/first interlayer/first electrolyte membrane/second catalyst layer (cathode catalyst layer)" that is an embodiment of the catalyst coated electrolyte membrane will be described. Examples of such a producing method include the following producing method (hereinafter referred to as a "first producing method").

That is, the first producing method is a method of producing a catalyst coated electrolyte membrane, including: providing a laminate (L) containing a first electrolyte membrane and a first interlayer laminated on the first electrolyte membrane, a first catalyst layer transfer sheet (T_{C1}) containing a first catalyst layer and a second electrolyte membrane laminated in this order on a first support, and a second catalyst layer transfer sheet (T_{C2}) containing a second catalyst layer laminated on a second support; and
bringing the first interlayer of the laminate (L) into contact with the second electrolyte membrane of the first catalyst layer transfer sheet (T_{C1}), and bringing the first electrolyte membrane of the laminate (L) into contact with the second catalyst layer of the second catalyst layer transfer sheet (T_{C2}).

Here, examples of a method of laminating the first interlayer on the first electrolyte membrane include: a method in which a coating liquid for the first interlayer is applied directly to the first electrolyte membrane, and then dried; and a method in which a coating liquid for the first interlayer is applied to a support, and dried to form an interlayer transfer sheet, and then, the first electrolyte membrane and the first interlayer of the interlayer transfer sheet are brought into contact with each other to cause a transfer. Any one of the methods can be suitably used.

In the above-described first producing method, thermocompression bonding is preferably performed in a step in which the first catalyst layer transfer sheet (T_{C1}) and the second catalyst layer transfer sheet (T_{C2}) are brought into contact with the laminate (L) (a "transferring step"). The heating temperature for the thermocompression bonding is preferably 50°C or more, more preferably 70°C or more, still more preferably 100°C or more. In addition, the heating temperature is preferably is 220°C or less, more preferably 200°C or less, still more preferably 180°C or less. The pressure is preferably 1 MPa or more, more preferably 2 MPa or more. In addition, the pressure is preferably 20 MPa or less, more preferably, 10 MPa or less. Performing the thermocompression bonding using conditions in the above-described preferable range makes it possible to obtain a catalyst coated electrolyte membrane having high water electrolysis capability and durability.

In the above-described producing first method, the laminate (L), the first catalyst layer transfer sheet (T_{C1}), and the second catalyst layer transfer sheet (T_{C2}) are each supplied in the form of a long roll, and the catalyst coated electrolyte membrane in the form of a long roll is preferably produced in the form of a long roll. That is, at least the above-described transferring step is preferably performed by a roll-to-roll method. Here, the roll-to-roll method is a method in which members are each supplied in the form of a long roll, continuously unwound, and conveyed to undergo a transferring step, and the resulting catalyst coated electrolyte membrane is wound up in the form of a long roll. The support of the first catalyst layer transfer sheet (T_{C1}) and the support of the second catalyst layer transfer sheet (T_{C2}) may each be peeled off before the catalyst coated electrolyte membrane is wound up in the form of a roll, or may be wound up together without being peeled off. Alternatively, peeling one support and winding up the other together may both be performed.

The above-described laminate (L) can be produced, as a laminate L having a membrane-formation base material therewith, by laminating the first interlayer on the first electrolyte membrane formed on the membrane-formation base material. The details are as described about the above-described method of producing an electrolyte membrane laminate. In a case where the above-described laminate (L) having a membrane-formation base material therewith is used, the transferring step needs to be performed after the membrane-formation base material is peeled off from the laminate (L) having the membrane-formation base material therewith.

Next, a method of producing a "first catalyst layer (anode catalyst layer)/second electrolyte membrane/first interlayer/first electrolyte membrane/second interlayer/third electrolyte membrane/second catalyst layer (cathode catalyst layer)" that is another embodiment of the catalyst coated electrolyte membrane will be described. Examples of such a producing method include the following producing method (hereinafter referred to as a "second producing method").

That is, the method is a method of producing a catalyst coated electrolyte membrane, including: providing a laminate (L) containing a first electrolyte membrane and a first interlayer laminated on the first electrolyte membrane, a first catalyst layer transfer sheet (T_{C1}) containing a first catalyst layer and a second electrolyte membrane laminated in this order on a first support, and a second catalyst layer transfer sheet (T_{C3}) containing a second catalyst layer, a third electrolyte membrane, and a second interlayer laminated in this order on a second support; and
bringing the first interlayer of the laminate (L) into contact with the second electrolyte membrane of the first catalyst layer transfer sheet (T_{C1}), and bringing the first electrolyte membrane of the laminate (L) into contact with the second interlayer of the second catalyst layer transfer sheet (T_{C3}).

In the above-described second producing method, thermocompression bonding is preferably performed in a step in which the first catalyst layer transfer sheet (T_{C1}) and the second catalyst layer transfer sheet (T_{C3}) are brought into contact with the laminate (L) (a "transferring step"). The thermocompression bonding conditions are the same as in the above-described first producing method. In addition, the other producing conditions can be the same as in the above-described first producing method.

### EXAMPLES

Hereinafter, the present invention will be more specifically described with reference to Examples, but the present invention is not limited to these Examples. In this regard, the measurement conditions are as below-mentioned.

### (1) Molecular Weight of Polymer

The number-average molecular weight and weight-average molecular weight of a polymer solution were measured by GPC. As an integrated device including an ultraviolet detector and a differential refractometer, an HLC-8022GPC manufactured by Tosoh Corporation was used. In addition, as GPC columns, two TSK gel SuperHM-H columns (having an inner diameter of 6.0 mm and a length of 15 cm) manufactured by Tosoh Corporation were used. Measurements were made using an N-methyl-2-pyrrolidone solvent (an N-methyl-2-pyrrolidone solvent containing 10 mmol/L lithium bromide) at a flow rate of 0.2 mL/min, and the number-average molecular weight and weight-average molecular weight were determined in terms of standard polystyrene.

### (2) Ion Exchange Capacity (IEC)

Measurements were made by a neutralization titration method. The measurement was performed three times, and the average of the three measurements was adopted.

An electrolyte membrane was subjected to proton exchange, and thoroughly washed with pure water, and water on the membrane surface was wiped off. Then, the electrolyte membrane was vacuum-dried at 100°C for 12 hours or more, and the dry weight of the membrane was obtained.

To the electrolyte membrane, 50 mL of an aqueous 5 mass% sodium sulfate solution was added, and the electrolyte membrane was left to stand for 12 hours for ion exchange.

The sulfuric acid generated was titrated using an aqueous 0.01 mol/L sodium hydroxide solution. A commercially available 0.1 w/v% phenolphthalein solution for titration was added as an indicator, and the point at which the solution turned pale red-purple was taken as the end point.

The ion exchange capacity (IEC) was determined in accordance with the following formula. 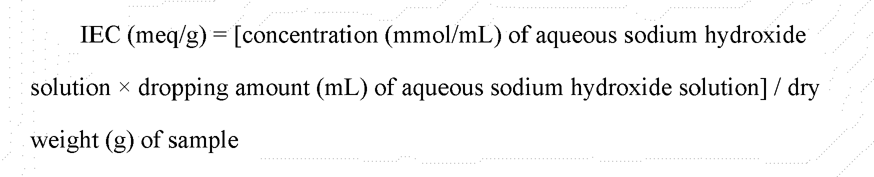 IEC (meq/g) = [concentration (mmol/mL) of aqueous sodium hydroxide solution × dropping amount (mL) of aqueous sodium hydroxide solution] / dry weight (g) of sample

### (3) Observation of Phase-separation Structure by Transmission Electron Microscopic (TEM) Tomography

A sample piece of an electrolyte membrane was immersed in an aqueous 2 mass% lead acetate solution as a staining agent, left to stand at 25°C for 48 hours, and stained. The sample stained was taken out, embedded in an epoxy resin, and irradiated with visible light for 30 seconds to be fixed. A 100 nm thin piece was cut out using an ultramicrotome at room temperature, and observed in accordance with the following conditions.

Device: a field emission electron microscope (HRTEM) JEM2100F (manufactured by JEOL Ltd.)
Image-capturing: Digital Micrograph
System: a marker method
Accelerating voltage: 200 kV
Photographic magnification: 30,000 times
Angle of tilt: +61° to -62°
Reconstruction resolution: 0.71 nm/pixel

The marker method was applied to the three-dimensional reconstruction process. An alignment marker used for performing three-dimensional reconstruction was Au colloidal particles provided on a collodion film. Using the marker as a reference, the sample was tilted in 1° steps in the range of from +61° to -62°, and TEM images were taken. On the basis of a total of 124 TEM images obtained from the continuous tilt image series, a CT reconstruction process was performed, and a three-dimensional phase-separation structure was observed.

### (4) Evaluation of Interlaminar Adhesiveness (Peelability)

A catalyst coated electrolyte membrane produced in each of Examples and Comparative Examples was cut to a size of 2 cm × 2 cm, and used as a test piece. This test piece was immersed in 20 g of ion-exchanged water at 23°C, and left to stand for 16 hours. Then, whether delamination occurred was observed, and evaluated on the following criteria.
Good: no delamination occurred.
Poor: delamination occurred.

### (5) Evaluation of Water Electrolysis Capability and Hydrogen-proof Barrier Property

When the hydrogen-proof barrier property (hydrogen-decomposing capability) of an electrolyte membrane laminate was evaluated, a membrane electrode assembly (MEA) was produced as below-described using an electrolyte membrane laminate and a catalyst coated electrolyte membrane.

A commercially available gas diffusion electrode 24BCH manufactured by SGL Carbon AG was cut to 5 cm square, and used as a cathode gas diffusion electrode. In addition, a commercially available porous titanium sintered plate was cut to 5 cm square, and used as an anode gas diffusion electrode. The above-described cathode gas diffusion electrode and anode gas diffusion electrode were used to sandwich a catalyst coated electrolyte membrane, whereby an MEA was produced.

### [Evaluation of Water Electrolysis Capability]

The MEA produced as above-described was set in a JARI standard cell "Ex-1" (with an electrode having an area of 25 cm²) manufactured by Eiwa Corporation, and the cell temperature was set at 80°C. To both of the cathode electrode and the anode electrode, de-ionized water having an electroconductivity of 1 µS/cm or less was supplied at a flow rate of 0.2 L/min at an atmospheric pressure, and an electric current of 2 A/cm² was applied to produce hydrogen gas and oxygen gas through a water-electrolytic reaction. The voltage applied to the cell as above-described was regarded as a water electrolysis capability.

### [Measurement of Concentration of Hydrogen Gas in Oxygen Gas]

Water was removed from the oxygen gas generated and emitted from the anode in the above-described evaluation of water electrolysis capability, and then the oxygen gas was introduced in a gas chromatographic device to measure the concentration (ppm, a volume ratio) of hydrogen gas in the oxygen gas in accordance with the following conditions.

Device: 490 Micro GC, manufactured by Agilent Technologies, Inc.
Column: Part No. 493001360, Type BF CHA 10m MS5A Unl, Facl, manufactured by Agilent Technologies, Inc.
Carrier gas: Ar
Column temperature: 100°C

### (6) Evaluation of Chemical Durability

After the water electrolysis capability and the hydrogen-proof barrier property were evaluated, the durability was evaluated using the same device and cell. When this was done, the cell was held at 1.0 A/cm² at a temperature of 50°C, the time taken until the water-electrolysis voltage reached 1.9 V was regarded as the electrolysis capability retention time, and used as an index of evaluation of durability.

### [Synthesis Example 1]

### (Synthesis of 2,2-bis(4-hydroxyphenyl)-1,3-dioxolane (K-DHBP) represented by the following chemical formula (G1))

In a 500 mL flask equipped with a stirrer, a thermometer, and a distillation tube, 49.5 g of 4,4'-dihydroxybenzophenone, 134 g of ethylene glycol, 96.9 g of trimethyl orthoformate, and 0.50 g ofp-toluenesulfonic acid monohydrate were fed and dissolved. Then, the resulting solution was stirred for 2 hours at a temperature kept at 78 to 82°C. Further, the internal temperature was gradually raised to 120°C, and the solution was heated until the distillation of methyl formate, methanol, and trimethyl orthoformate completely stopped. After the reaction liquid was cooled to room temperature, the reaction liquid was diluted with ethyl acetate, the organic layer was washed with 100 mL of an aqueous 5% potassium carbonate solution, the resulting liquid was separated, and the solvent was distilled off. To the residue, 80 mL of dichloromethane was added to deposit crystals, and the crystals were filtrated and dried to give 52.0 g of 2,2-bis(4-hydroxyphenyl)-1,3-dioxolane represented by the following chemical formula (G1). This crystal was analyzed by GC, and found to contain 99.9% 2,2-bis(4-hydroxyphenyl)-1,3-dioxolane and 0.1% 4,4'-dihydroxybenzophenone. The compound had a purity of 99.9%.

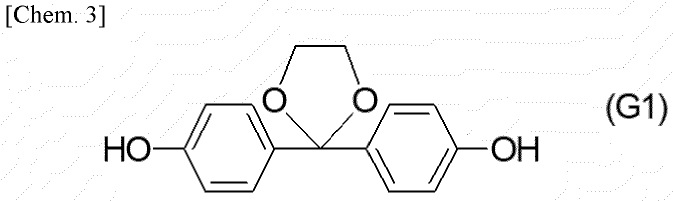

### [Synthesis Example 2]

### (Synthesis of disodium-3,3'-disulfonate-4,4'-difluorobenzophenone represented by the following chemical formula (G2))

In 150 mL of fuming sulfuric acid (50% SO₃) (a reagent from Fujifilm Wako Pure Chemical Corporation), 109.1 g of 4,4'-difluorobenzophenone (a reagent from Sigma-Aldrich Japan) was allowed to react at 100°C for 10 hours. Then, the resulting product was gradually poured into a large amount of water, the resulting mixture was neutralized with NaOH, and then 200 g of sodium chloride (NaCl) was added to the mixture to precipitate a synthesized product. The precipitate obtained was filtrated off and recrystallized from an aqueous ethanol solution to give disodium-3,3'-disulfonate-4,4'-difluorobenzophenone represented by the following chemical formula (G2). The compound had a purity of 99.3%.

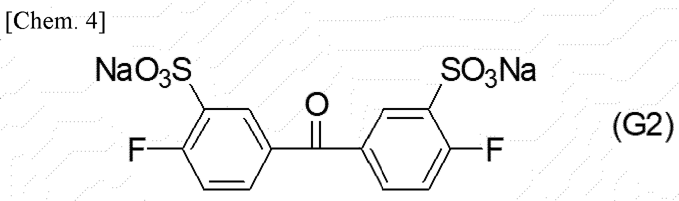

### [Synthesis Example 3]

### (Synthesis of nonionic oligomer a1 represented by the following general formula (G3))

Into a 2,000 mL stainless-steel polymerizer equipped with a stirrer, a nitrogen introduction tube, and a Dean-Stark trap, 16.59 g of potassium carbonate (an Aldrich reagent, 120 mmol), 25.83 g (100 mmol) of K-DHBP obtained in Synthesis Example 1, and 20.3 g of 4,4'-difluorobenzophenone (an Aldrich reagent, 93 mmol) were introduced. After the device was purged with nitrogen, 300 mL of *N-*methylpyrrolidone (NMP) and 100 mL of toluene were added, the resulting mixture was dehydrated at 150°C, the temperature was raised to remove toluene, and the mixture was polymerized at 170°C for 3 hours. The resulting product was purified by reprecipitation in a large amount of methanol to obtain a nonionic oligomer a1 having a hydroxy end. The number-average molecular weight of this nonionic oligomer a1 having a hydroxy end was 10,000.

Into a 500 mL three-necked flask equipped with a stirrer, a nitrogen introduction tube, and a Dean-Stark trap, 1.1 g of potassium carbonate (a reagent from Sigma-Aldrich Japan, 8 mmol) and 20.0 g (2 mmol) of the nonionic oligomer a1 having a hydroxy end were introduced. After the device was purged with nitrogen, 100 mL of NMP and 30 mL of toluene were added, the resulting mixture was dehydrated at 100°C, and the temperature was raised to remove toluene. Furthermore, 2.2 g of hexafluorobenzene (a reagent from Sigma-Aldrich Japan, 12 mmol) was added, and the resulting mixture was allowed to react at 105°C for 12 hours. The resulting product was purified by reprecipitation in a large amount of isopropyl alcohol to obtain a nonionic oligomer a1 (having a fluoro end group) represented by the following general formula (G3). The number-average molecular weight was 11,000.

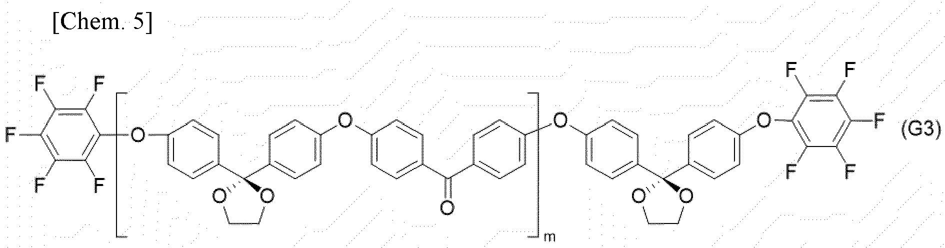

### [Synthesis Example 4]

### (Synthesis of ionic oligomer a2 represented by the following general formula (G4))

Into a 2,000 mL stainless-steel polymerizer equipped with a stirrer, a nitrogen introduction tube, and a Dean-Stark trap, 27.6 g of potassium carbonate (a reagent from Sigma-Aldrich Japan, 200 mmol), 12.9 g (50 mmol) of K-DHBP obtained in Synthesis Example 1, 9.3 g of 4,4'-biphenol (a reagent from Sigma-Aldrich Japan, 50 mmol), 39.3 g (93 mmol) of disodium-3,3'-disulfonate-4,4'-difluorobenzophenone obtained in Synthesis Example 2, and 17.9 g of 18-crown-6 (from Fujifilm Wako Pure Chemical Corporation, 82 mmol) were introduced. After the device was purged with nitrogen, 300 mL of NMP and 100 mL of toluene were added, the resulting mixture was dehydrated at 150°C, the temperature was raised to remove toluene, and the mixture was polymerized at 170°C for 6 hours. The resulting product was purified by reprecipitation in a large amount of isopropyl alcohol to obtain an ionic oligomer a2 (having a hydroxy end group) represented by the following general formula (G4). The number-average molecular weight was 16,000. 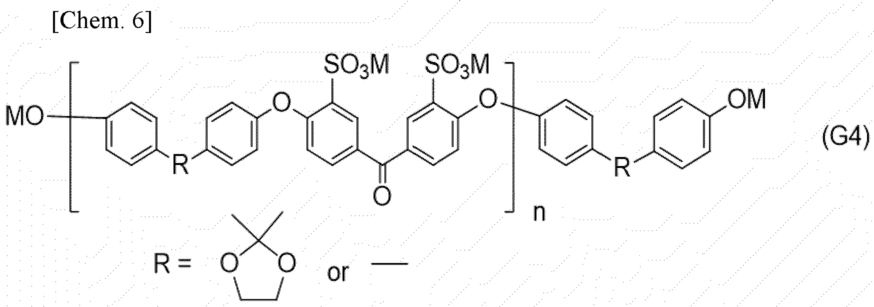 (In the general formula (G4), M represents H, Na, or K.)

### [Synthesis Example 5]

### (Synthesis of neopentyl 3-(2,5-dichlorobenzoyl)benzenesulfonate represented by the following chemical formula (G5))

Into a 3 L three-necked flask equipped with a stirrer and a cooling tube, 245 g (2.1 mol) of chlorosulfonic acid was introduced, subsequently 105 g (420 mmol) of 2,5-dichlorobenzophenone was added, and the resulting mixture was allowed to react in an oil bath at 100°C for 8 hours. After a predetermined period of time, the reaction liquid was poured onto 1,000 g of crushed ice slowly, and extracted with ethyl acetate. The organic layer was washed with a saline solution, and dried over magnesium sulfate. Then, ethyl acetate was distilled off to obtain a pale yellow crude crystal of 3-(2,5-dichlorobenzoyl)benzenesulfonic chloride. The crude crystal was directly used without being purified in the next step.

To 300 mL of pyridine, 41.1 g (462 mmol) of 2,2-dimethyl-1-propanol (neopentyl alcohol) was added, and the resulting mixture was cooled to approximately 10°C. The crude crystal obtained as above-described was gradually added over a period of approximately 30 minutes. After all the amount of the crude crystal was added, the resulting mixture was stirred for another 30 minutes to react. After the reaction, the reaction liquid was poured into 1,000 mL of hydrochloric acid water to collect a solid precipitated. The solid obtained was dissolved in ethyl acetate, and the resulting solution was washed with an aqueous sodium hydrogencarbonate solution and a saline solution, and then dried over magnesium sulfate. Then, ethyl acetate was distilled off to obtain a crude crystal. This was recrystallized with methanol to obtain a white crystal of neopentyl 3-(2,5-dichlorobenzoyl)benzenesulfonate represented by the following chemical formula (G5).

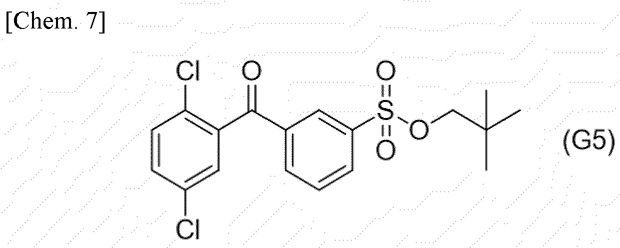

### [Synthesis Example 6]

### (Synthesis of oligomer having no ionic group and represented by the following general formula (G6))

Into a 1 L three-necked flask equipped with a stirrer, a thermometer, a cooling tube, a Dean-Stark tube, and a nitrogen introduction three-way cock, 49.4 g (0.29 mol) of 2,6-dichlorobenzonitrile, 88.4 g (0.26 mol) of 2,2-bis(4-hydroxyphenyl)-1,1,1,3,3,3-hexafluoropropane, and 47.3 g (0.34 mol) of potassium carbonate were weighed out. After the device was purged with nitrogen, 346 mL of sulfolane and 173 mL of toluene were added, and the resulting mixture was stirred. The flask was immersed in an oil bath, and the mixture was heated under reflux at 150°C. The resulting solution was allowed to react, during which water generated by the reaction was allowed to undergo azeotropy with toluene, and thus removed out of the system through the Dean-Stark tube. In approximately 3 hours, almost no generation of water was observed. The reaction temperature was gradually raised to remove the majority of the toluene, and then, the reaction was continued at 200°C for 3 hours. Next, 12.3 g (0.072 mol) of 2,6-dichlorobenzonitrile was added, and the resulting mixture was further allowed to react for 5 hours.

The reaction liquid obtained was left to cool, and then diluted with the addition of 100 mL of toluene. The precipitate of the inorganic compound byproduced was removed by filtration, and the filtrate was introduced into 2 l of methanol. The product precipitated was filtrated, collected, dried, and then dissolved in 250 mL of tetrahydrofuran. This was reprecipitated in 2 L of methanol to obtain 107 g of an oligomer of interest represented by the following general formula (G6). The number-average molecular weight was 11,000.

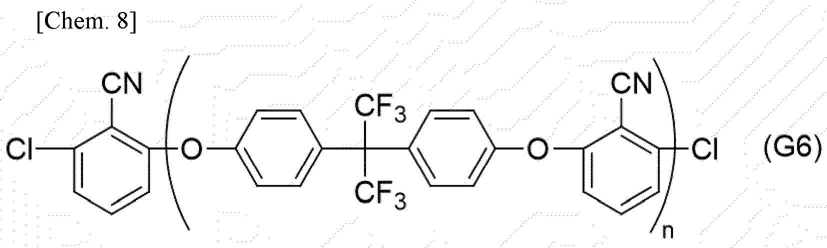

### [Synthesis Example 7]

### (Synthesis of polyether sulfone (PES)-based block copolymer precursor b4' composed of segment represented by the following chemical formula (G8) and segment represented by the following general formula (G9))

Anhydrous nickel chloride in an amount of 1.62 g and dimethyl sulfoxide in an amount of 15 mL were mixed, and adjusted to 70°C. To this, 2.15 g of 2,2'-bipyridyl was added, and the resulting mixture was stirred at the same temperature for 10 minutes to prepare a nickel-containing solution.

Here, 1.49 g of (2,2-dimethylpropyl) 2,5-dichlorobenzenesulfonate and 0.50 g of SUMIKAEXCEL PES5200P (manufactured by Sumitomo Chemical Co., Ltd., Mn = 40,000, Mw = 94,000) represented by the following general formula (G7) were dissolved in 5 mL of dimethyl sulfoxide, and to the resulting solution, 1.23 g of zinc powder was added, and adjusted to 70°C. Into this, the nickel-containing solution was poured, and the resulting mixture was allowed to undergo a polymerization reaction at 70°C for 4 hours. The reaction mixture was added to 60 mL of methanol, then 60 mL of 6 mol/L hydrochloric acid was added, and the resulting mixture was stirred for 1 hour. The solid precipitated was separated by filtration, and dried to obtain 1.62 g of a light gray block copolymer precursor b4' containing segments represented by the following general formula (G8) and the following general formula (G9) respectively with a yield of 99%. The weight-average molecular weight was 230,000.

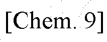

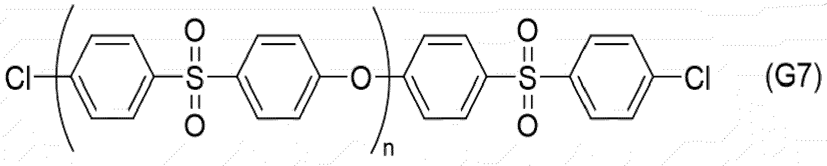

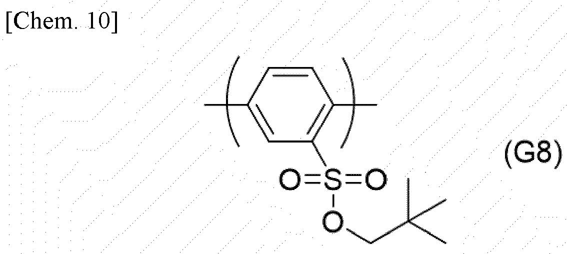

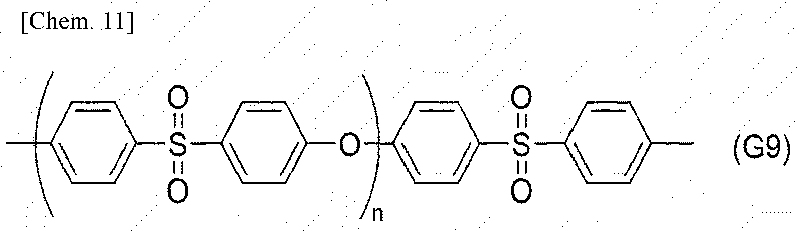

### [Coating Liquid P1 for First Electrolyte Membrane] Polymer electrolyte solution composed of block copolymer C1 containing oligomer a2 as ionic segment and oligomer a1 as nonionic segment

In a 2,000 mL stainless-steel polymerizer equipped with a stirrer, a nitrogen introduction tube, and a Dean-Stark trap, 16 g of the ionic oligomer a2 and 11 g of the nonionic oligomer a1 were introduced, NMP was added in such a manner that the total amount of the oligomers fed was 7 wt%, and the resulting mixture was allowed to react at 105°C for 24 hours.

The resulting product was reprecipitated in a large amount of an isopropyl alcohol/NMP solution mixture (at a weight ratio of 2/1), and the precipitate obtained was collected by filtration, and washed with a large amount of isopropyl alcohol to obtain a copolymer P1. The weight-average molecular weight was 340,000. The ion exchange capacity (IEC) of this block copolymer P1 was 2.1 meq/g. Subsequently, the block copolymer P1 was dissolved in NMP, and filtrated under pressure using a 1 µm polypropylene-made filter to obtain a polymer electrolyte solution P1 (having a polymer electrolyte at a concentration of 13 mass%) as a coating liquid for a first electrolyte membrane. The viscosity of the polymer electrolyte solution P1 was 1,300 mPa·s.

### [Coating Liquid P2 for First Electrolyte Membrane] Polymer electrolyte solution composed of random copolymer C2

Into a 5 L reaction container equipped with a stirrer, a nitrogen introduction tube, and a Dean-Stark trap, 129 g of 2,2-bis(4-hydroxyphenyl)-1,3-dioxolane synthesized in Synthesis Example 1, 93 g of 4,4'-biphenol (a reagent from Sigma-Aldrich Japan), and 422 g (1.0 mol) of disodium-3,3'-disulfonate-4,4'-difluorobenzophenone synthesized in Synthesis Example 2 were introduced. After the device was purged with nitrogen, 3,000 g of NMP, 450 g of toluene, and 232 g of 18-crown-6 (a reagent from Fujifilm Wako Pure Chemical Corporation) were added. The dissolution of all the monomers was verified, and then 304 g of potassium carbonate (a reagent from Sigma-Aldrich Japan) was added. The resulting mixture was dehydrated at 160°C under reflux, then heated to remove toluene, and underwent desalting polycondensation at 200°C for 1 hour. The resulting random copolymer C2 had a weight-average molecular weight of 320,000 and an ion exchange capacity (IEC) of 2.1.

Next, NMP was added to dilute a polymer stock solution in such a manner that the viscosity of the solution became 500 mPa·s. An angle rotor RA-800 was set in an inverter-compact high-speed cooling centrifuge (model number 6930) manufactured by Kubota Corporation, and the polymer stock solution was directly centrifuged at 25°C at a centrifugal force of 20,000 G for 30 minutes. The solid (cake) precipitated and the supernatant liquid (coating liquid) were clearly separated, and the supernatant liquid was collected. Next, the supernatant liquid was distilled under reduced pressure at 80°C with stirring, and NMP was removed until the polymer concentration became 14 mass%. The liquid was further filtrated under pressure through a 5 µm polyethylene-made filter to obtain a polymer electrolyte solution P2 as a coating liquid for a first electrolyte membrane. The viscosity of this polymer electrolyte solution P2 was 1,000 mPa·s.

### [Coating Liquid P3 for First Electrolyte Membrane] Polymer electrolyte solution composed of polyarylene-based block copolymer C3 represented by the following general formula (G10)

Under nitrogen, 540 mL of dried N,N-dimethylacetoamide (DMAc) was added to a mixture of 135.0 g (0.336 mol) of neopentyl 3-(2,5-dichlorobenzoyl)benzenesulfonate, 40.7 g (5.6 mmol) of the nonionic oligomer synthesized in Synthesis Example 6 and represented by the general formula (G6), 6.71 g (16.8 mmol) of 2,5-dichloro-4'-(1-imidazolyl)benzophenone, 6.71 g (10.3 mmol) of bis(triphenylphosphine)nickel dichloride, 35.9 g (0.137 mol) of triphenylphosphine, 1.54 g of (10.3 mmol) of sodium iodide, and 53.7 g (0.821 mol) of zinc.

The reaction system was heated under stirring (finally heated to 79°C), and allowed to react for 3 hours. An increase in the viscosity in the system was observed during the reaction. The polymerization reaction solution was diluted with 730 mL of DMAc, stirred for 30 minutes, and filtrated using Celite as a filter aid.

The filtrate was concentrated with an evaporator, 43.8 g (0.505 mol) of lithium bromide was added to the filtrate, and the resulting mixture was allowed to react at an internal temperature of 110°C under a nitrogen atmosphere for 7 hours. After the reaction, the mixture was cooled to room temperature, poured into 4 L of acetone, and solidified. The product solidified was collected by filtration, air-dried, pulverized with a mixer, and washed with 1,500 mL of 1 N hydrochloric acid with stirring. After filtration, the product was washed with ion-exchanged water until the washing liquid came to have a pH of 5 or more. The product was dried at 80°C overnight to obtain 23.0 g of a polyarylene-based block copolymer C3. The polyarylene-based block copolymer C3 after this deprotection had a weight-average molecular weight of 190,000 and an ion exchange capacity (IEC) of 2.0. The resulting polyarylene-based block copolymer C3 was dissolved at 0.1 g/g in an organic solvent mixture of *N*-methyl-2-pyrrolidone/methanol at 30/70 (mass%) to obtain a polymer electrolyte solution P3 as a coating liquid for a first electrolyte membrane. The viscosity of the polymer electrolyte solution P3 was 1,200 mPa·s.

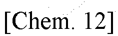

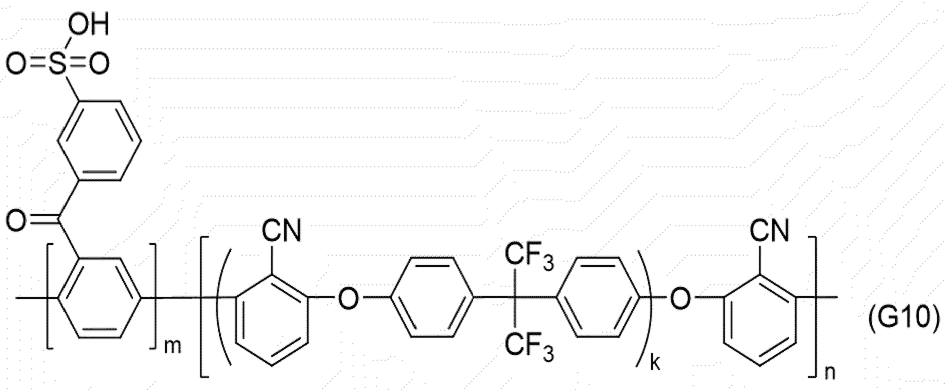

### [Coating Liquid P4 for First Electrolyte Membrane] Polymer electrolyte solution composed of polyether sulfone-based block copolymer C4

The block copolymer precursor b4' obtained in Synthesis Example 7 was weighed at 0.23 g, and added to a solution mixture of 0.16 g of lithium bromide monohydrate and 8 mL of NMP, and the resulting mixture was allowed to react at 120°C for 24 hours. The reaction mixture was poured into 80 mL of 6 mol/L hydrochloric acid, and the resulting mixture was stirred for 1 hour. The solid precipitated was separated by filtration. The solid separated was dried to obtain a light gray block copolymer C4 composed of a segment represented by the general formula (G9) and a segment represented by the following chemical formula (G11). The resulting polyether sulfone-based block copolymer C4 had a weight-average molecular weight of 190,000 and an ion exchange capacity (IEC) of 2.0. The resulting polyether sulfone-based block copolymer C4 was dissolved at 0.1 g/g in an organic solvent of *N*-methyl-2-pyrrolidone/methanol at 30/70 (mass%) to obtain a polymer electrolyte solution P4 as a coating liquid for a first electrolyte membrane. The viscosity of the polymer electrolyte solution P4 was 1,300 mPa·s.

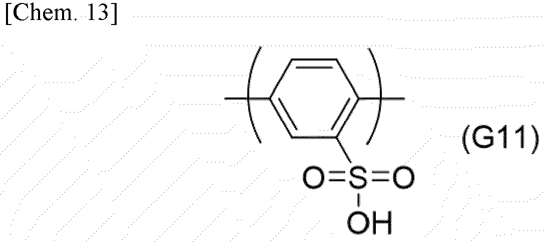

### [Coating Liquid E for First Interlayer]

Platinum catalyst-supporting carbon particles TEC10V60TPM (with platinum supported at a ratio of 60 mass%) manufactured by Tanaka Kikinzoku Kogyo K.K. and a D2020 "Nafion" (registered trademark) dispersion liquid manufactured by The Chemours Company were mixed and prepared in such a manner that the mass ratio of the platinum catalyst-supporting carbon particles:"Nafion" (registered trademark) was 3: 1. This coating liquid E for a first interlayer was used also as a coating liquid for a second interlayer.

### [Coating Liquid F for First Interlayer]

A coating liquid F for a first interlayer was prepared in the same manner as the coating liquid E for a first interlayer except that carbon particles "VULCAN" (registered trademark) XC72 manufactured by Cabot Corporation were used in place of TEC10V60TPM, and that the mass ratio of the carbon particles: "Nafion" (registered trademark) was 1.2:1.

### [Coating Liquid G for First Interlayer]

A coating liquid G for a first interlayer was prepared in the same manner as the coating liquid F for a first interlayer except that the block copolymer C1 was used in place of "Nafion" (registered trademark).

### [Coating Liquid H for Anode Catalyst Layer]

A coating liquid H for an anode catalyst layer was prepared in the same manner as the coating liquid E for a first interlayer except that an IrO₂ catalyst Elyst Ir75 0480 (with the Ir content at 75%) manufactured by Umicore S.A. was used in place of TEC10V60TPM, and that the mass ratio of the IrO₂ catalyst:"Nafion" (registered trademark) was 10: 1.

### [Coating Liquid I for Cathode Catalyst Layer]

A coating liquid I for a cathode catalyst layer was prepared in the same manner as the coating liquid E for a first interlayer except that platinum catalyst-supporting carbon particles TEC10E50E (with platinum supported at a ratio of 50 mass%) manufactured by Tanaka Kikinzoku Kogyo K.K. were used in place of TEC10V60TPM, and that the mass ratio of the platinum catalyst-supporting carbon particles:"Nafion" was 2:1.

### [Coating Liquid J for Second Electrolyte Membrane]

A coating liquid J for a second electrolyte membrane was prepared in the same manner as the coating liquid E for a first interlayer except that platinum nanoparticles (having an average particle size of 200 nm) manufactured by Sigma-Aldrich Japan were used in place of TEC10V60TPM, and that the mass ratio of platinum nanoparticles:"Nafion" (registered trademark) was 0.1:1. This coating liquid J for a second electrolyte membrane was used also as a coating liquid for a third electrolyte membrane.

### [Coating Liquid K for First Interlayer]

A coating liquid K for a first interlayer was prepared in the same manner as the coating liquid E for a first interlayer except that palladium-activated carbon (with palladium supported at a ratio of 10 mass%) manufactured by Fujifilm Wako Pure Chemical Corporation was used in place of TEC10V60TPM, and that the mass ratio of palladium-supporting carbon particles:"Nafion" was 1.33:1.

### [Coating Liquid L for Second Electrolyte Membrane]

A D2020 "Nafion" (registered trademark) dispersion liquid manufactured by The Chemours Company was directly used as a coating liquid L for a second electrolyte membrane without being processed.

### [Production of Catalyst Coated Electrolyte Membrane]

When the performance of an electrolyte membrane laminate was evaluated, a catalyst coated electrolyte membrane that is a form of use of an electrolyte membrane laminate was produced and evaluated.

### [Example 1]

### [Production of First Electrolyte Membrane]

Using "KAPTON" (registered trademark) tape, a PET film "LUMIRROR" (registered trademark) 125T60 manufactured by Toray Industries, Inc. was bonded and fixed to a stainless steel plate. Using a knife coater, the polymer electrolyte solution P1 was applied to a PET film by cast coating, and then dried at 100°C for 4 hours to obtain a film-like polymer. This polymer was immersed in an aqueous 10 mass% sulfuric acid solution at 80°C for 24 hours to undergo proton exchange and deprotection reaction, and then immersed in a large excess amount of pure water for 24 hours to be thoroughly washed, to obtain a first electrolyte membrane (having a thickness of 100 µm).

### [Production of Laminate L of First Electrolyte Membrane and First Interlayer]

Using a knife coater, the coating liquid E for a first interlayer was applied to the first electrolyte membrane by cast coating, and dried at 100°C for 4 hours to laminate, on the first electrolyte membrane, a first interlayer composed of platinum catalyst-supporting carbon particles and "Nafion" (registered trademark). When this was done, the thickness was adjusted in such a manner that the basis weight of the solid became 0.67 mg/cm².

### [Production of Anode Catalyst Layer Transfer Sheet Having Second Electrolyte Membrane Laminated therein]

The coating liquid H for an anode catalyst was applied to a commercially available polytetrafluoroethylene-made film by cast coating in such a manner that the amount of iridium became 1.0 mg/cm². The coating liquid was dried at 100°C for 4 hours to produce a catalyst layer. The coating liquid J for a second electrolyte membrane was further applied to this catalyst layer by cast coating, and dried at 100°C for 4 hours to obtain an anode catalyst layer transfer sheet (decal) having a second electrolyte membrane laminated therein. When this was done, the thickness of the coating was adjusted in such a manner that the thickness of the second electrolyte membrane was 3.5 µm.

### [Production of Cathode Catalyst Layer Transfer Sheet]

The coating liquid H for a cathode catalyst was applied to a commercially available polytetrafluoroethylene-made film by cast coating in such a manner that the amount of platinum became 0.3 mg/cm². The coating liquid was dried at 100°C for 4 hours to produce a cathode catalyst layer transfer sheet (decal).

### [Production of Catalyst Coated Electrolyte Membrane]

The laminate L was peeled off from the PET film, and the first interlayer of the laminate L was superposed on and brought into contact with the second interlayer of the anode catalyst layer transfer sheet, and the first electrolyte membrane of the laminate L was superposed on and brought into contact with the cathode catalyst layer of the cathode catalyst layer transfer sheet. The resulting laminate was hot-pressed at 150°C at 5 MPa for 3 minutes, cooled to 40°C or less under pressure, and then freed from pressure to obtain a catalyst coated electrolyte membrane. This catalyst coated electrolyte membrane was constituted by the anode catalyst layer/second electrolyte membrane/first interlayer/first electrolyte membrane/cathode catalyst layer.

### [Example 2]

A catalyst coated electrolyte membrane was obtained in the same manner as in Example 1 except that the coating liquid F for a first interlayer was used in place of the coating liquid E for a first interlayer.

### [Example 3]

### [Production of Cathode Catalyst Layer Transfer Sheet Having Second Interlayer and Third Electrolyte Membrane Laminated therein]

The coating liquid I for a cathode catalyst was applied to a commercially available polytetrafluoroethylene-made film by cast coating in such a manner that the amount of platinum became 0.3 mg/cm². The coating liquid was dried at 100°C for 4 hours to produce a cathode catalyst layer. Onto this cathode catalyst layer, the coating liquid J for a third electrolyte membrane (the same as the coating liquid J for a second electrolyte membrane) was applied by cast coating, and dried at 100°C for 4 hours to laminate a third electrolyte membrane on the cathode catalyst layer, and furthermore, the coating liquid E for a second interlayer (the same as the coating liquid E for a first interlayer) was applied onto the third electrolyte membrane by cast coating, and dried at 100°C for 4 hours to obtain a cathode catalyst layer transfer sheet (decal). When this was done, the thickness of each coating was adjusted in such a manner that the thickness of the third electrolyte membrane became 3.5 µm, and that the basis weight of the solid of the second interlayer became 0.67 mg/cm².

### [Production of Catalyst Coated Electrolyte Membrane]

A catalyst coated electrolyte membrane was obtained in the same manner as in Example 1 except that the above-described cathode catalyst layer transfer sheet was used. This catalyst coated electrolyte membrane was constituted by the anode catalyst layer/second electrolyte membrane/first interlayer/first electrolyte membrane/second interlayer/third electrolyte membrane/cathode catalyst layer.

### [Example 4]

A catalyst coated electrolyte membrane was obtained in the same manner as in Example 1 except that the coating liquid G for a first interlayer was used in place of the coating liquid E for a first interlayer.

### [Example 5]

A catalyst coated electrolyte membrane was obtained in the same manner as in Example 1 except that the coating liquid P2 for a first electrolyte membrane was used in place of the coating liquid P1 for a first electrolyte membrane.

### [Example 6]

A catalyst coated electrolyte membrane was obtained in the same manner as in Example 1 except that the coating liquid P3 for a first electrolyte membrane was used in place of the coating liquid P1 for a first electrolyte membrane.

### [Example 7]

A catalyst coated electrolyte membrane was obtained in the same manner as in Example 1 except that the coating liquid P4 for a first electrolyte membrane was used in place of the coating liquid P1 for a first electrolyte membrane.

### [Example 8]

### [Production of First Interlayer Transfer Sheet]

Using a knife coater, the coating liquid E for a first interlayer was applied to a commercially available polytetrafluoroethylene-made film by cast coating, and dried at 100°C for 4 hours to produce a first interlayer transfer sheet composed of platinum catalyst-supporting carbon particles and "Nafion" (registered trademark). When this was done, the thickness was adjusted in such a manner that the basis weight of the solid became 0.67 mg/cm².

### [Production of Laminate M of Second Catalyst Layer, First Electrolyte Membrane, and First Interlayer]

In the same manner as in Example 1, a first electrolyte membrane was produced on a PET film using the coating liquid P1 for a first electrolyte membrane. The first electrolyte membrane was peeled off from the PET film, and the first electrolyte membrane was sandwiched between the cathode catalyst transfer sheet produced in the same manner as in Example 1 and the above-described first interlayer transfer sheet. The resulting laminate was hot-pressed at 150°C at 5 MPa for 3 minutes, cooled to 40°C or less under pressure, and then freed from pressure to obtain a laminate M of the second catalyst layer, the first electrolyte membrane, and the first interlayer.

### [Production of Catalyst Coated Electrolyte Membrane]

In the same manner as in Example 1, an anode catalyst layer transfer sheet having a second electrolyte membrane laminated therein was produced. From the above-described laminate M, the polytetrafluoroethylene film in contact with the first interlayer was peeled off, and the resulting laminate was hot-pressed at 150°C at 5 MPa for 3 minutes in a state in which the first interlayer was in contact with the second electrolyte membrane. The laminate was cooled to 40°C or less under pressure, and then freed from pressure to obtain a catalyst coated electrolyte membrane. This catalyst coated electrolyte membrane was constituted by the anode catalyst layer/second electrolyte membrane/first interlayer/first electrolyte membrane/cathode catalyst layer.

### [Example 9]

A catalyst coated electrolyte membrane was obtained in the same manner as in Example 1 except that the thickness of the first electrolyte membrane was 50 µm.

### [Example 10]

A catalyst coated electrolyte membrane was obtained in the same manner as in Example 1 except that the coating liquid K for a first interlayer was used in place of the coating liquid E for a first interlayer.

### [Comparative Example 1]

A catalyst coated electrolyte membrane was obtained in the same manner as in Example 1 except that, in Example 1, neither the first interlayer nor the second electrolyte membrane was disposed. This catalyst coated electrolyte membrane was constituted by the anode catalyst layer/first electrolyte membrane/cathode catalyst layer.

### [Comparative Example 2]

A catalyst coated electrolyte membrane was obtained in the same manner as in Example 1 except that, in Example 1, the first interlayer was not disposed. This catalyst coated electrolyte membrane was constituted by the anode catalyst layer/second electrolyte membrane/first electrolyte membrane/cathode catalyst layer.

### [Comparative Example 3]

The coating liquid H for a catalyst was applied to a commercially available polytetrafluoroethylene-made film by cast coating in such a manner that the amount of platinum became 0.3 mg/cm². The liquid was dried at 100°C for 4 hours to produce an anode catalyst transfer sheet having an anode catalyst alone. A catalyst coated electrolyte membrane was obtained in the same manner as in Example 1 except that the above-described anode catalyst transfer sheet having an anode catalyst alone was used in place of the anode catalyst layer transfer sheet having the second electrolyte membrane laminated therein. This catalyst coated electrolyte membrane was constituted by the anode catalyst layer/first interlayer/first electrolyte membrane/cathode catalyst layer.

### [Comparative Example 4]

### [Production of Anode Catalyst Layer Transfer Sheet Having Second Electrolyte Membrane Laminated therein]

The coating liquid H for an anode catalyst was applied to a commercially available polytetrafluoroethylene-made film by cast coating in such a manner that the amount of iridium became 1.0 mg/cm². The coating liquid was dried at 100°C for 4 hours to produce a catalyst layer. Separately, the coating liquid L for a second electrolyte membrane was applied to a commercially available polytetrafluoroethylene-made film by cast coating, and dried at 100°C for 4 hours to obtain a "Nafion" (registered trademark) membrane. When this was done, the thickness of the coating was adjusted in such a manner that the thickness of the "Nafion" (registered trademark) membrane was 3.5 µm. Subsequently, platinum nanoparticles (having an average particle size of 200 nm) manufactured by Sigma-Aldrich Japan were dispersed in ethanol, and applied to a "Nafion" (registered trademark) membrane at a mass ratio of 0.1:1 as the platinum nanoparticle:the "Nafion" (registered trademark). The "Nafion" (registered trademark) membrane coated with the platinum nanoparticles was peeled off from the tetrafluoroethylene-made film, and laminated on the anode catalyst layer in such a manner that the platinum nanoparticles-coated face was in contact with the anode catalyst layer. The resulting laminate was hot-pressed at 150°C at 5 MPa for 3 minutes, cooled to 40°C or less under pressure, and then freed from pressure to obtain an anode catalyst layer transfer sheet having a second electrolyte membrane laminated therein.

### [Production of Catalyst Coated Electrolyte Membrane]

A catalyst coated electrolyte membrane was obtained in the same manner as in Example 1 except that the above-described anode catalyst layer transfer sheet was used.

### [Comparative Example 5]

A catalyst coated electrolyte membrane was obtained in the same manner as in Comparative Example 4 except that cerium oxide nanoparticles (having a particle size of <50 nm) manufactured by Sigma-Aldrich Japan were used in place of platinum nanoparticles (having an average particle size of 200 nm) manufactured by Sigma-Aldrich Japan.

### [Evaluation]

The first electrolyte membrane produced in each of the above-described Examples and Comparative Examples was evaluated for the IEC and the phase-separation structure. In addition, the catalyst coated electrolyte membrane produced in each of the Examples and Comparative Examples was evaluated for the interlaminar adhesiveness (peelability), the water electrolysis capability (a voltage needed to be applied to the cell when water electrolysis is caused at an electric current of 2.0 A/cm²), the hydrogen-proof barrier property (the measurement of the concentration of hydrogen in oxygen gas), and the electrolysis performance retention time (time taken to reach 1.9 V). The results are tabulated in Table 1 to Table 3. In this regard, the evaluation of the water electrolysis capability and the measurement of the concentration of hydrogen in oxygen gas were performed only on samples that did not cause delamination during the evaluation of the interlaminar adhesiveness (peelability).

**[Table 1]**

| | | | Example 1 | Example 2 | Example 3 | Example 4 | Example 5 | Example 6 |
|---|---|---|---|---|---|---|---|---|
| 1st Electrolyte Membrane | Coating Liquid for 1st Electrolyte Membrane | | P1 | P1 | P1 | P1 | P2 | P3 |
| | Polymer Electrolyte included in the above Coating Liquid | | C1 | C1 | C1 | C1 | C2 | C3 |
| | Ion Exchange Capacity (IEC) | [meq/g] | 2.1 | 2.1 | 2.1 | 2.1 | 2.1 | 2.0 |
| | Phase Separation Structure | | Bicontinuous | Bicontinuous | Bicontinuous | Bicontinuous | absence | Lamella |
| | Membrane Thickness | [µm] | 100 | 100 | 100 | 100 | 100 | 100 |
| 1st Intermediate Layer | Coating Liquid for 1st Intermediate Layer | | E | F | E | G | E | E |
| | Polymer Electrolyte included in the above Coating Liquid | | "Nafion"^{®} | "Nafion"^{®} | "Nafion"^{®} | C1 | "Nafion"^{®} | "Nafion"^{®} |
| | Particle | | TEC10V60TP | "Vulcan"^{®}XC72 | TEC10V60TP | "Vulcan"^{®}XC72 | TEC10V60TP | TEC10V60TP |
| | Particle/Polymer Electrolyte | (Mass Ratio) | 3.0 | 1.2 | 3.0 | 1.2 | 3.0 | 3.0 |
| | Coated Amount | [mg/cm²] | 0.67 | 0.37 | 0.67 | 0.37 | 0.67 | 0.67 |
| | Lamination Method | | Coating | Coating | Coating | Coating | Coating | Coating |
| 2nd Electrolyte Membrane | Coating Liquid for 2nd Electrolyte Membrane | | J | J | J | J | J | J |
| | Polymer Electrolyte included in the above Coating Liquid | | "Nafion"^{®} | "Nafion"^{®} | "Nafion"^{®} | "Nafion"^{®} | "Nafion"^{®} | "Nafion"^{®} |
| | Particle containing Transition Metal | | Pt nano Particle | Pt nano Particle | Pt nano Particle | Pt nano Particle | Pt nano Particle | Pt nano Particle |
| | Location of Particle containing Transition Metal | | Dispersion in Membrane | Dispersion in Membrane | Dispersion in Membrane | Dispersion in Membrane | Dispersion in Membrane | Dispersion in Membrane |
| | Particle containing Transition Metal/Polymer Electrolyte | (Mass Ratio) | 0.1 | 0.1 | 0.1 | 0.1 | 0.1 | 0.1 |
| | Membrane Thickness | [µm] | 3.5 | 3.5 | 3.5 | 3.5 | 3.5 | 3.5 |
| 2nd Intermediate Layer | Coating Liquid for 2nd Intermediate Layer | | - | - | E | - | - | - |
| | Polymer Electrolyte included in the above Coating Liquid | | - | - | "Nafion"^{®} | - | - | - |
| | Particle | | - | - | TEC10V60TP | - | - | - |
| | Particle/Polymer Electrolyte | (Mass Ratio) | - | - | 3.0 | - | - | - |
| | Coated Amount | [mg/cm²] | - | - | 0.67 | - | - | - |
| 3rd Electrolyte Membrane | Coating Liquid for 3rd Electrolyte Membrane | | - | - | J | - | - | - |
| | Polymer Electrolyte included in the above Coating Liquid | | - | - | "Nafion"^{®} | - | - | - |
| | Particle containing Transition Metal | | - | - | Pt nano Particle | - | - | - |
| | Particle containing Transition Metal/Polymer Electrolyte | (Mass Ratio) | - | - | 0.1 | - | - | - |
| | Membrane Thickness | [µm] | - | - | 3.5 | - | - | - |
| Evaluation of Catalyst Coated Electrolyte Membrane | Interlam inar Peel Property | | good | good | good | good | good | good |
| | Water Electrolysis Performance | [V@2A/cm²] | 1.73 | 1.72 | 1.80 | 1.69 | 1.79 | 1.75 |
| | Hydrogen Concentration in Oxgen Gas | [ppm] | 200 | 310 | 70 | 180 | 130 | 370 |
| | Electrolytic Performance Retention Time | [Hours] | 390 | 520 | 280 | 490 | 380 | 370 |

**[Table 2]**

| | | | Example 7 | Example 8 | Example 9 | Example 10 |
|---|---|---|---|---|---|---|
| 1st Electrolyte Membrane | Coating Liquid for 1st Electrolyte Membrane | | P4 | P1 | P1 | P1 |
| | Polymer Electrolyte included in the above Coating Liquid | | C4 | C1 | C1 | C1 |
| | Ion Exchange Capacity (IEC) | [meq/g] | 2.0 | 2.1 | 2.1 | 2.1 |
| | Phase Separation Structure | | Bicontinuous | Bicontinuous | Bicontinuous | Bicontinuous |
| | Membrane Thickness | [µm] | 100 | 100 | 50 | 100 |
| 1st Intermediate Layer | Coating Liquid for 1st Intermediate Layer | | E | E | E | K |
| | Polymer Electrolyte included in the above Coating Liquid | | "Nafion"^{®} | "Nafion"^{®} | "Nafion"^{®} | "Nafion"^{®} |
| | Particle | | TEC10V60TP | TEC10V60TP | TEC10V60TP | Pd/C |
| | Particle/Polymer Electrolyte | (Mass Ratio) | 3.0 | 3.0 | 3.0 | 1.33 |
| | Coated Amount | [mg/cm²] | 0.67 | 0.67 | 0.67 | 0.67 |
| | Lamination Method | | Coating | Transfer | Coating | Coating |
| 2nd Electrolyte Membrane | Coating Liquid for 2nd Electrolyte Membrane | | J | J | J | J |
| | Polymer Electrolyte included in the above Coating Liquid | | "Nafion"^{®} | "Nafion"^{®} | "Nafion"^{®} | "Nafion"^{®} |
| | Particle containing Transition Metal | | Pt nano Particle | Pt nano Particle | Pt nano Particle | Pt nano Particle |
| | Location of Particle containing Transition Metal | | Dispersion in Membrane | Dispersion in Membrane | Dispersion in Membrane | Dispersion in Membrane |
| | Particle containing Transition Metal/Polymer Electrolyte | (Mass Ratio) | 0.1 | 0.1 | 0.1 | 0.1 |
| | Membrane Thickness | [µm] | 3.5 | 3.5 | 3.5 | 3.5 |
| 2nd Intermediate Layer | Coating Liquid for 2nd Intermediate Layer | | - | - | - | - |
| | Polymer Electrolyte included in the above Coating Liquid | | - | - | - | - |
| | Particle | | - | - | - | - |
| | Particle/Polymer Electrolyte | (Mass Ratio) | - | - | - | - |
| | Coated Amount | [mg/cm²] | - | - | - | - |
| 3rd Electrolyte Membrane | Coating Liquid for 3rd Electrolyte Membrane | | - | - | - | - |
| | Polymer Electrolyte included in the above Coating Liquid | | - | - | - | - |
| | Particle containing Transition Metal | | - | - | - | - |
| | Particle containing Transition Metal/Polymer Electrolyte | (Mass Ratio) | - | - | - | - |
| | Membrane Thickness | [µm] | - | - | 3.5 | - |
| Evaluation of Catalyst Coated Electrolyte Membrane | Interlaminar Peel Property | | good | good | good | good |
| | Water Electrolysis Performance | [V@2A/cm²] | 1.81 | 1.74 | 1.71 | 1.72 |
| | Hydrogen Concentration in Oxgen Gas | [ppm] | 360 | 210 | 380 | 60 |
| | Electrolytic Performance Retention Time | [Hours] | 360 | 400 | 270 | 80 |

**[Table 3]**

| | | | Comparative Example 1 | Comparative Example 2 | Comparative Example 3 | Comparative Example 4 | Comparative Example 5 |
|---|---|---|---|---|---|---|---|
| 1st Electrolyte Membrane | Coating Liquid for 1st Electrolyte Membrane | | P1 | P1 | P1 | P1 | P1 |
| | Polymer Electrolyte included in the above Coating Liquid | | C1 | C1 | C1 | C1 | C1 |
| | Ion Exchange Capacity(IEC) | [meq/g] | 2.1 | 2.1 | 2.1 | 2.1 | 2.1 |
| | Phase Separation Structure | | Bicontinuous | Bicontinuous | Bicontinuous | Bicontinuous | Bicontinuous |
| | Membrane Thickness | [µm] | 100 | 100 | 100 | 100 | 100 |
| 1st Intermediate Layer | Coating Liquid for 1st Intermediate Layer | | - | - | E | E | E |
| | Polymer Electrolyte included in the above Coating Liquid | | - | - | "Nafion"^{®} | "Nafion"^{®} | "Nafion"^{®} |
| | Particle | | - | - | TEC10V60TP | TEC10V60TP | TEC10V60TP |
| | Particle/Polymer Electrolyte | (Mass Ratio) | - | - | 3.0 | 3.0 | 3.0 |
| | Coated Amount | [mg/cm²] | - | - | 0.67 | 0.67 | 0.67 |
| | Lamination Method | | - | - | Coating | Coating | Coating |
| 2nd Electrolyte Membrane | Coating Liquid for 2nd Electrolyte Membrane | | - | J | - | L | L |
| | Polymer Electrolyte included in the above Coating Liquid | | - | "Nafion"^{®} | - | "Nafion"^{®} | "Nafion"^{®} |
| | Particle containing Transition Metal | | - | Pt nano Particle | - | Pt nano Particle | CeO₂ nano |
| | Location of Particle containing Transition Metal | | - | Dispersion in Membrane | - | Surface of Catalyst Side | Surface of Catalyst Side |
| | Particle containing Transition Metal/Polymer Electrolyte | (Mass Ratio) | - | 0.1 | - | 0.1 | 0.1 |
| | Membrane Thickness | [µm] | - | 3.5 | - | 3.5 | 3.5 |
| 2nd Intermediate Layer | Coating Liquid for 2nd Intermediate Layer | | - | - | - | - | - |
| | Polymer Electrolyte included in the above Coating Liquid | | - | - | "Nafion"^{®} | - | |
| | Particle | | - | - | - | - | - |
| | Particle/Polymer Electrolyte | (Mass Ratio) | - | - | - | - | - |
| | Coated Amount | [mg/cm²] | - | - | - | - | - |
| 3rd Electrolyte Membrane | Coating Liquid for 3rd Electrolyte Membrane | | - | - | - | - | - |
| | Polymer Electrolyte included in the above Coating Liquid | | - | - | "Nafion"^{®} | - | - |
| | Particle containing Transition Metal | | - | - | - | - | - |
| | Particle containing Transition Metal/Polymer Electrolyte | (Mass Ratio) | - | - | - | - | - |
| | Membrane Thickness | [µm] | - | - | 3.5 | - | - |
| Evaluation of Catalyst Coated Electrolyte Membrane | Interlaminar Peel Property | | good | poor | good | good | good |
| | Water Electrolysis Performance | [V@2A/cm²] | 1.65 | - | 1.70 | 1.76 | 1.77 |
| | Hydrogen Concentration in Oxgen Gas | [ppm] | 2680 | - | 2570 | 1760 | 2660 |
| | Electrolytic Performance Retention Time | [Hours] | 350 | - | 360 | 370 | 410 |

Note 1) the polymer electrolyte in the coating liquid P1 for the first electrolyte membrane:the block copolymer C1, the polymer electrolyte in the coating liquid P2 for the first electrolyte membrane:the random copolymer C2, the polymer electrolyte in the coating liquid P3 for the first electrolyte membrane:the polyarylene-based block copolymer C3, the polymer electrolyte in the coating liquid P4 for the first electrolyte membrane:the polyether sulfone-based block copolymer C4, the polymer electrolyte in the coating liquid E for the first interlayer and in the coating liquid F for the first interlayer:"Nafion" (registered trademark), the polymer electrolyte in the coating liquid G for the first interlayer:the block copolymer C1, the polymer electrolyte in the coating liquid H for the anode catalyst layer and in the coating liquid I for the cathode catalyst layer:"Nafion" (registered trademark), the polymer electrolyte in the coating liquid J for the second electrolyte membrane:"Nafion" (registered trademark), TEC10V60TPM:the platinum catalyst-supporting carbon particles (with platinum supported at a ratio of 60 mass%), "Vulcan" (registered trademark) XC72:the carbon particles, the Pt nanoparticles:the platinum nanoparticles having an average particle size of 200 nm, the CeO₂ nanoparticles:the CeO₂ nanoparticles having a particle size of <50 nm

### Industrial Applicability

An electrolyte membrane laminate, catalyst coated electrolyte membrane, and membrane electrode assembly according to the present invention can each be used for various uses. For example, the electrolyte membrane can be used in medical uses such as extracorporeal circulation columns and artificial skin, filtration uses, ion-exchange resin uses, various structural material uses, and electrochemical uses. Above all, the electrolyte membrane can be more preferably used in various electrochemical uses. Examples of the electrochemical uses include fuel cells, redox-flow batteries, water electrolysis hydrogen generators, electrochemical hydrogen compressors, and the like. Among these, water electrolysis hydrogen generators are most preferable.

## Claims

1. An electrolyte membrane laminate comprising: a first electrolyte membrane having a first main surface and a second main surface; and a first interlayer and a second electrolyte membrane in this order on said first main surface of said first electrolyte membrane; wherein said first electrolyte membrane contains a hydrocarbon-based polymer electrolyte containing ionic groups, said first interlayer contains a polymer electrolyte and particles, and said second electrolyte membrane contains a polymer electrolyte and particles containing a transition metal element,
preferably comprising a third electrolyte membrane on said second main surface of said first electrolyte membrane, preferably comprising a second interlayer between said second main surface of said first electrolyte membrane and said third electrolyte membrane, wherein said second interlayer contains a polymer electrolyte and particles,
wherein said third electrolyte membrane contains a polymer electrolyte and particles containing a transition metal element,
wherein said hydrocarbon-based polymer encompasses the fluorine atom content of which is less than 5 mass% per the number-average molecular weight of the polymer,
wherein said transition metal element is selected from platinum, gold, silver, copper, palladium, ruthenium, rhodium, cerium, manganese, iridium, nickel, or cobalt,
wherein a mass ratio, i.e. the mass of said particles containing a transition metal element / the mass of said polymer electrolyte, of said particles containing a transition metal element to said polymer electrolyte contained in said second electrolyte membrane and/or in said third electrolyte membrane is 0.01 to 0.85, and
wherein said mass ratio of said particles to said polymer electrolyte contained in said first interlayer is 0.5 to 20.0, and
wherein said mass ratio of said particles to said polymer electrolyte contained in said second interlayer is preferably 0.5 to 20.0.

2. The electrolyte membrane laminate according to claim 1, wherein said polymer electrolyte(s) contained in said second electrolyte membrane and/or in said third electrolyte membrane contain(s) a fluorine-based polymer electrolyte, and wherein said fluorine-based polymer is a polymer in the molecule of which the majority or all of the hydrogen atoms in an alkyl group and/or in an alkylene group replaced with fluorine atom.

3. The electrolyte membrane laminate according to claim 1 or 2, wherein said particles containing a transition metal element and contained in said second electrolyte membrane and/or in said third electrolyte membrane contain particles of at least one kind selected from zerovalent metal particles, metal oxide particles, or metal salt particles including silver chloride, silver sulfate, silver carbonate, silver phosphate, basic copper carbonate, copper phosphate, palladium sulfate, cerium sulfate, cerium carbonate, cerium phosphate, manganese carbonate, manganese phosphate, iridium chloride, cobalt sulfate, and/or cobalt phosphate.

4. The electrolyte membrane laminate according to any one of claims 1 to 3, wherein said particles contained in said first interlayer and/or in said second interlayer are inorganic particles,
preferably said particles contained in said first interlayer and/or in said second interlayer are particles containing a carbon atom,
preferably said particles contained in said first interlayer and/or in said second interlayer are carbon particles and/or metal-supporting carbon particles,
preferably said particles contained in said first interlayer and/or in said second interlayer are carbon particles.

5. The electrolyte membrane laminate according to any one of claims 1 to 4, wherein said polymer electrolyte(s) contained in said first interlayer and/or in said second interlayer contain(s) a fluorine-based polymer electrolyte, and
wherein said fluorine-based polymer is a polymer in the molecule of which the majority or all of the hydrogen atoms in an alkyl group and/or in an alkylene group replaced with fluorine atom.

6. The electrolyte membrane laminate according to any one of claims 1 to 5, wherein said hydrocarbon-based polymer electrolyte contained in said first electrolyte membrane contains an aromatic polyether-based polymer electrolyte.

7. A catalyst coated electrolyte membrane comprising a catalyst layer on each of both surfaces of said electrolyte membrane laminate according to any one of claims 1 to 6, wherein a first catalyst layer is on said first main surface side of said electrolyte membrane laminate, and a second catalyst layer is on said second main surface side of said electrolyte membrane laminate,
preferably said first catalyst layer is an anode catalyst layer, and said second catalyst layer is a cathode catalyst layer.

8. A membrane electrode assembly comprising said catalyst coated electrolyte membrane according to claim 7, a first gas diffusion layer on said first catalyst layer, and a second gas diffusion layer on said second catalyst layer.

9. A water electrolysis hydrogen generator comprising said catalyst coated electrolyte membrane according to claim 7.

10. A method of producing the catalyst coated electrolyte membrane according to claim 7, comprising: providing a laminate (L) containing a first electrolyte membrane and a first interlayer laminated on said first electrolyte membrane, a first catalyst layer transfer sheet (T_{C1}) containing a first catalyst layer and a second electrolyte membrane laminated in this order on a first support, and a second catalyst layer transfer sheet (T_{C2}) containing a second catalyst layer laminated on a second support; and
bringing said first interlayer of said laminate (L) into contact with said second electrolyte membrane of said first catalyst layer transfer sheet (T_{C1}), and bringing said first electrolyte membrane of said laminate (L) into contact with said second catalyst layer of said second catalyst layer transfer sheet (T_{C2}),
or,
a method of producing a catalyst coated electrolyte membrane, comprising: providing a laminate (L) containing a first electrolyte membrane and a first interlayer laminated on said first electrolyte membrane, a first catalyst layer transfer sheet (T_{C1}) containing a first catalyst layer and a second electrolyte membrane laminated in this order on a first support, and a second catalyst layer transfer sheet (T_{C3}) containing a second catalyst layer, a third electrolyte membrane, and a second interlayer laminated in this order on a second support; and
bringing said first interlayer of said laminate (L) into contact with said second electrolyte membrane of said first catalyst layer transfer sheet (T_{C1}), and bringing said first electrolyte membrane of said laminate (L) into contact with said second interlayer of said second catalyst layer transfer sheet (T_{C3}).

11. The method of producing a catalyst coated electrolyte membrane according to claim 10, wherein said particles contained in said first interlayer are inorganic particles.

12. The method of producing a catalyst coated electrolyte membrane according to 10 or 11, wherein said catalyst coated electrolyte membrane is manufactured by a roll-to-roll method.

## Patentansprüche

1. Elektrolytmembranlaminat, umfassend: eine erste Elektrolytmembran mit einer ersten Hauptoberfläche und einer zweiten Hauptoberfläche; und eine erste Zwischenschicht und eine zweite Elektrolytmembran in dieser Reihenfolge auf der ersten Hauptoberfläche der ersten Elektrolytmembran; wobei die erste Elektrolytmembran einen Polymerelektrolyten auf Kohlenwasserstoffbasis enthält, der ionische Gruppen enthält, die erste Zwischenschicht einen Polymerelektrolyten und Partikel enthält und die zweite Elektrolytmembran einen Polymerelektrolyten und Partikel enthält, die ein Übergangsmetallelement enthalten,
vorzugsweise umfassend eine dritte Elektrolytmembran auf der zweiten Hauptoberfläche der ersten Elektrolytmembran, vorzugsweise umfassend eine zweite Zwischenschicht zwischen der zweiten Hauptoberfläche der ersten Elektrolytmembran und der dritten Elektrolytmembran, wobei die zweite Zwischenschicht einen Polymerelektrolyten und Partikel enthält,
wobei die dritte Elektrolytmembran einen Polymerelektrolyten und Partikel enthält, die ein Übergangsmetallelement enthalten,
wobei das Polymer auf Kohlenwasserstoffbasis den Fluoratomgehalt davon umfasst, der weniger als 5 Massen-% pro zahlenmittleres Molekulargewicht des Polymers beträgt,
wobei das Übergangsmetallelement ausgewählt ist aus Platin, Gold, Silber, Kupfer, Palladium, Ruthenium, Rhodium, Cer, Mangan, Iridium, Nickel oder Kobalt,
wobei ein Massenverhältnis, d.h. die Masse der Partikel, die ein Übergangsmetallelement enthalten, / die Masse des Polymerelektrolyten, der Partikel, die ein Übergangsmetallelement enthalten, zu dem Polymerelektrolyten, der in der zweiten Elektrolytmembran und/oder in der dritten Elektrolytmembran enthalten ist, 0,01 bis 0,85 beträgt, und
wobei das Massenverhältnis der Partikel zu dem Polymerelektrolyten, der in der ersten Zwischenschicht enthalten ist, 0,5 bis 20,0 beträgt, und
wobei das Massenverhältnis der Partikel zu dem Polymerelektrolyten, der in der zweiten Zwischenschicht enthalten ist, vorzugsweise 0,5 bis 20,0 beträgt.

2. Elektrolytmembranlaminat nach Anspruch 1, wobei der/die Polymerelektrolyt(e), der/die in der zweiten Elektrolytmembran und/oder in der dritten Elektrolytmembran enthalten ist/sind, einen Polymerelektrolyten auf Fluorbasis enthält/enthalten, und wobei das Polymer auf Fluorbasis ein Polymer ist, in dessen Molekül die Mehrheit oder alle der Wasserstoffatome in einer Alkylgruppe und/oder in einer Alkylengruppe durch ein Fluoratom ersetzt ist/sind.

3. Elektrolytmembranlaminat nach Anspruch 1 oder 2, wobei die Partikel, die ein Übergangsmetallelement enthalten und in der zweiten Elektrolytmembran und/oder in der dritten Elektrolytmembran enthalten sind, Partikel mindestens einer Art enthalten, die ausgewählt ist aus nullwertigen Metallpartikeln, Metalloxidpartikeln oder Metallsalzpartikeln, einschließlich Silberchlorid, Silbersulfat, Silbercarbonat, Silberphosphat, basischem Kupfercarbonat, Kupferphosphat, Palladiumsulfat, Cersulfat, Cercarbonat, Cerphosphat, Mangancarbonat, Manganphosphat, Iridiumchlorid, Kobaltsulfat und/oder Kobaltphosphat.

4. Elektrolytmembranlaminat nach einem der Ansprüche 1 bis 3, wobei die Partikel, die in der ersten Zwischenschicht und/oder in der zweiten Zwischenschicht enthalten sind, anorganische Partikel sind,
vorzugsweise die Partikel, die in der ersten Zwischenschicht und/oder in der zweiten Zwischenschicht enthalten sind, Partikel sind, die ein Kohlenstoffatom enthalten,
vorzugsweise die Partikel, die in der ersten Zwischenschicht und/oder in der zweiten Zwischenschicht enthalten sind, Kohlenstoffpartikel und/oder metalltragende Kohlenstoffpartikel sind,
vorzugsweise die Partikel, die in der ersten Zwischenschicht und/oder in der zweiten Zwischenschicht enthalten sind, Kohlenstoffpartikel sind.

5. Elektrolytmembranlaminat nach einem der Ansprüche 1 bis 4, wobei der/die Polymerelektrolyt(e), der/die in der ersten Zwischenschicht und/oder in der zweiten Zwischenschicht enthalten ist/sind, einen Polymerelektrolyten auf Fluorbasis enthält/enthalten, und
wobei das Polymer auf Fluorbasis ein Polymer ist, in dessen Molekül die Mehrheit oder alle der Wasserstoffatome in einer Alkylgruppe und/oder in einer Alkylengruppe durch ein Fluoratom ersetzt ist/sind.

6. Elektrolytmembranlaminat nach einem der Ansprüche 1 bis 5, wobei der Polymerelektrolyt auf Kohlenwasserstoffbasis, der in der ersten Elektrolytmembran enthalten ist, einen Polymerelektrolyten auf Basis eines aromatischen Polyethers enthält.

7. Katalysatorbeschichtete Elektrolytmembran, umfassend eine Katalysatorschicht auf jeder der beiden Oberflächen des Elektrolytmembranlaminats nach einem der Ansprüche 1 bis 6, wobei sich eine erste Katalysatorschicht auf der ersten Hauptoberflächenseite des Elektrolytmembranlaminats befindet und sich eine zweite Katalysatorschicht auf der zweiten Hauptoberflächenseite des Elektrolytmembranlaminats befindet,
vorzugsweise die erste Katalysatorschicht eine Anodenkatalysatorschicht ist und die zweite Katalysatorschicht eine Kathodenkatalysatorschicht ist.

8. Membranelektrodenanordnung, umfassend die katalysatorbeschichtete Elektrolytmembran nach Anspruch 7, eine erste Gasdiffusionsschicht auf der ersten Katalysatorschicht und eine zweite Gasdiffusionsschicht auf der zweiten Katalysatorschicht.

9. Wasserelektrolyse-Wasserstoffgenerator, umfassend die katalysatorbeschichtete Elektrolytmembran nach Anspruch 7.

10. Verfahren zur Herstellung der katalysatorbeschichteten Elektrolytmembran nach Anspruch 7, umfassend: Bereitstellen eines Laminats (L), das eine erste Elektrolytmembran und eine erste Zwischenschicht, die auf die erste Elektrolytmembran laminiert ist, eine erste Katalysatorschichtübertragungslage (T_{C1}), die eine erste Katalysatorschicht und eine zweite Elektrolytmembran, die in dieser Reihenfolge auf einen ersten Träger laminiert sind, enthält, und eine zweite Katalysatorschichtübertragungslage (T_{C2}), die eine zweite Katalysatorschicht, die auf einen zweiten Träger laminiert ist, enthält, enthält; und
Inkontaktbringen der ersten Zwischenschicht des Laminats (L) mit der zweiten Elektrolytmembran der ersten Katalysatorschichtübertragungslage (T_{C1}) und Inkontaktbringen der ersten Elektrolytmembran des Laminats (L) mit der zweiten Katalysatorschicht der zweiten Katalysatorschichtübertragungslage (T_{C2}),
oder,
Verfahren zur Herstellung einer katalysatorbeschichteten Elektrolytmembran, umfassend: Bereitstellen eines Laminats (L), das eine erste Elektrolytmembran und eine erste Zwischenschicht, die auf die erste Elektrolytmembran laminiert ist, eine erste Katalysatorschichtübertragungslage (T_{C1}), die eine erste Katalysatorschicht und eine zweite Elektrolytmembran, die in dieser Reihenfolge auf einen ersten Träger laminiert sind, enthält, und eine zweite Katalysatorschichtübertragungslage (T_{C3}), die eine zweite Katalysatorschicht, eine dritte Elektrolytmembran und eine zweite Zwischenschicht, die in dieser Reihenfolge auf einen zweiten Träger laminiert sind, enthält, enthält; und
Inkontaktbringen der ersten Zwischenschicht des Laminats (L) mit der zweiten Elektrolytmembran der ersten Katalysatorschichtübertragungslage (T_{C1}) und Inkontaktbringen der ersten Elektrolytmembran des Laminats (L) mit der zweiten Zwischenschicht der zweiten Katalysatorschichtübertragungslage (T_{C3}).

11. Verfahren zur Herstellung einer katalysatorbeschichteten Elektrolytmembran nach Anspruch 10, wobei die Partikel, die in der ersten Zwischenschicht enthalten sind, anorganische Partikel sind.

12. Verfahren zur Herstellung einer katalysatorbeschichteten Elektrolytmembran nach Anspruch 10 oder 11, wobei die katalysatorbeschichtete Elektrolytmembran durch ein Rollezu-Rolle-Verfahren hergestellt wird.

## Revendications

1. Stratifié de membrane électrolytique comprenant : une première membrane électrolytique ayant une première surface principale et une deuxième surface principale ; et une première couche intermédiaire et une deuxième membrane électrolytique dans cet ordre sur ladite première surface principale de ladite première membrane électrolytique ; dans lequel ladite première membrane électrolytique contient un électrolyte polymère à base d'hydrocarbure contenant des groupes ioniques, ladite première couche intermédiaire contient un électrolyte polymère et des particules, et ladite deuxième membrane électrolytique contient un électrolyte polymère et des particules contenant un élément de métal de transition,
comprenant de préférence une troisième membrane électrolytique sur ladite deuxième surface principale de ladite première membrane électrolytique, comprenant de préférence une deuxième couche intermédiaire entre ladite deuxième surface principale de ladite première membrane électrolytique et ladite troisième membrane électrolytique, dans lequel ladite deuxième couche intermédiaire contient un électrolyte polymère et des particules,
dans lequel ladite troisième membrane électrolytique contient un électrolyte polymère et des particules contenant un élément de métal de transition,
dans lequel ledit polymère à base d'hydrocarbure englobe la teneur en atome de fluor de celui-ci qui est inférieure à 5 % en masse par la masse moléculaire moyenne en nombre du polymère,
dans lequel ledit élément de métal de transition est choisi parmi le platine, l'or, l'argent, le cuivre, le palladium, le ruthénium, le rhodium, le cérium, le manganèse, l'iridium, le nickel ou le cobalt,
dans lequel un rapport en masse, c'est-à-dire la masse desdites particules contenant un élément de métal de transition / la masse dudit électrolyte polymère, desdites particules contenant un élément de métal de transition audit électrolyte polymère contenu dans ladite deuxième membrane électrolytique et/ou dans ladite troisième membrane électrolytique est de 0,01 à 0,85, et
dans lequel ledit rapport en masse desdites particules audit électrolyte polymère contenu dans ladite première couche intermédiaire est de 0,5 à 20,0, et
dans lequel ledit rapport en masse desdites particules audit électrolyte polymère contenu dans ladite deuxième couche intermédiaire est de préférence de 0,5 à 20,0.

2. Stratifié de membrane électrolytique selon la revendication 1, dans lequel ledit/lesdits électrolyte(s) polymère(s) contenu(s) dans ladite deuxième membrane électrolytique et/ou dans ladite troisième membrane électrolytique contient/contiennent un électrolyte polymère à base de fluor, et dans lequel ledit polymère à base de fluor est un polymère dans la molécule duquel la majorité ou la totalité des atomes d'hydrogène dans un groupe alkyle et/ou dans un groupe alkylène sont remplacés par un atome de fluor.

3. Stratifié de membrane électrolytique selon la revendication 1 ou 2, dans lequel lesdites particules contenant un élément de métal de transition et contenues dans ladite deuxième membrane électrolytique et/ou dans ladite troisième membrane électrolytique contiennent des particules d'au moins un type choisi parmi des particules de métal zéro-valent, des particules d'oxyde de métal, ou des particules de sel de métal comprenant le chlorure d'argent, le sulfate d'argent, le carbonate d'argent, le phosphate d'argent, le carbonate de cuivre basique, le phosphate de cuivre, le sulfate de palladium, le sulfate de cérium, le carbonate de cérium, le phosphate de cérium, le carbonate de manganèse, le phosphate de manganèse, le chlorure d'iridium, le sulfate de cobalt et/ou le phosphate de cobalt.

4. Stratifié de membrane électrolytique selon l'une quelconque des revendications 1 à 3, dans lequel lesdites particules contenues dans ladite première couche intermédiaire et/ou dans ladite deuxième couche intermédiaire sont des particules inorganiques,
de préférence lesdites particules contenues dans ladite première couche intermédiaire et/ou dans ladite deuxième couche intermédiaire sont des particules contenant un atome de carbone,
de préférence lesdites particules contenues dans ladite première couche intermédiaire et/ou dans ladite deuxième couche intermédiaire sont des particules de carbone et/ou des particules de carbone supportant un métal,
de préférence lesdites particules contenues dans ladite première couche intermédiaire et/ou dans ladite deuxième couche intermédiaire sont des particules de carbone.

5. Stratifié de membrane électrolytique selon l'une quelconque des revendications 1 à 4, dans lequel ledit/lesdits électrolyte(s) polymère(s) contenu(s) dans ladite première couche intermédiaire et/ou dans ladite deuxième couche intermédiaire contient/contiennent un électrolyte polymère à base de fluor, et
dans lequel ledit polymère à base de fluor est un polymère dans la molécule duquel la majorité ou la totalité des atomes d'hydrogène dans un groupe alkyle et/ou dans un groupe alkylène sont remplacés par un atome de fluor.

6. Stratifié de membrane électrolytique selon l'une quelconque des revendications 1 à 5, dans lequel ledit électrolyte polymère à base d'hydrocarbure contenu dans ladite première membrane électrolytique contient un électrolyte polymère à base de polyéther aromatique.

7. Membrane électrolytique revêtue de catalyseur comprenant une couche de catalyseur sur chacune des deux surfaces dudit stratifié de membrane électrolytique selon l'une quelconque des revendications 1 à 6, dans laquelle une première couche de catalyseur est sur ledit côté de première surface principale dudit stratifié de membrane électrolytique, et une deuxième couche de catalyseur est sur ledit côté de deuxième surface principale dudit stratifié de membrane électrolytique,
de préférence ladite première couche de catalyseur est une couche de catalyseur d'anode, et ladite deuxième couche de catalyseur est une couche de catalyseur de cathode.

8. Ensemble membrane-électrode comprenant ladite membrane électrolytique revêtue de catalyseur selon la revendication 7, une première couche de diffusion de gaz sur ladite première couche de catalyseur, et une deuxième couche de diffusion de gaz sur ladite deuxième couche de catalyseur.

9. Générateur d'hydrogène par électrolyse d'eau comprenant ladite membrane électrolytique revêtue de catalyseur selon la revendication 7.

10. Procédé de production de la membrane électrolytique revêtue de catalyseur selon la revendication 7, comprenant : la fourniture d'un stratifié (L) contenant une première membrane électrolytique et une première couche intermédiaire stratifiée sur ladite première membrane électrolytique, une première feuille de transfert de couche de catalyseur (T_{C1}) contenant une première couche de catalyseur et une deuxième membrane électrolytique stratifiées dans cet ordre sur un premier support, et une deuxième feuille de transfert de couche de catalyseur (T_{C2}) contenant une deuxième couche de catalyseur stratifiée sur un deuxième support ; et
la mise en contact de ladite première couche intermédiaire dudit stratifié (L) avec ladite deuxième membrane électrolytique de ladite première feuille de transfert de couche de catalyseur (T_{C1}), et la mise en contact de ladite première membrane électrolytique dudit stratifié (L) avec ladite deuxième couche de catalyseur de ladite deuxième feuille de transfert de couche de catalyseur (T_{C2}),
ou,
un procédé de production d'une membrane électrolytique revêtue de catalyseur, comprenant : la fourniture d'un stratifié (L) contenant une première membrane électrolytique et une première couche intermédiaire stratifiée sur ladite première membrane électrolytique, une première feuille de transfert de couche de catalyseur (T_{C1}) contenant une première couche de catalyseur et une deuxième membrane électrolytique stratifiées dans cet ordre sur un premier support, et une deuxième feuille de transfert de couche de catalyseur (T_{C3}) contenant une deuxième couche de catalyseur, une troisième membrane électrolytique, et une deuxième couche intermédiaire stratifiées dans cet ordre sur un deuxième support ; et
la mise en contact de ladite première couche intermédiaire dudit stratifié (L) avec ladite deuxième membrane électrolytique de ladite première feuille de transfert de couche de catalyseur (T_{C1}), et la mise en contact de ladite première membrane électrolytique dudit stratifié (L) avec ladite deuxième couche intermédiaire de ladite deuxième feuille de transfert de couche de catalyseur (T_{C3}).

11. Procédé de production d'une membrane électrolytique revêtue de catalyseur selon la revendication 10, dans lequel lesdites particules contenues dans ladite première couche intermédiaire sont des particules inorganiques.

12. Procédé de production d'une membrane électrolytique revêtue de catalyseur selon la revendication 10 ou 11, dans lequel ladite membrane électrolytique revêtue de catalyseur est fabriquée par un procédé rouleau à rouleau.
